(19) **Europäisches Patentamt** / **European Patent Office** / **Office européen des brevets**

(11) **EP 3 540 652 B1**

(12) **EUROPEAN PATENT SPECIFICATION**

(45) Date of publication and mention
of the grant of the patent:
**14.06.2023 Bulletin 2023/24**

(21) Application number: **17875081.6**

(22) Date of filing: **06.07.2017**

(51) International Patent Classification (IPC):
***G06N 3/084*** *(2023.01)*

(52) Cooperative Patent Classification (CPC):
**G06N 3/084**

(86) International application number:
**PCT/CN2017/092091**

(87) International publication number:
**WO 2018/099084 (07.06.2018 Gazette 2018/23)**

(54) **METHOD, DEVICE, CHIP AND SYSTEM FOR TRAINING NEURAL NETWORK MODEL**

VERFAHREN, VORRICHTUNG, CHIP UND SYSTEM ZUM TRAINIEREN EINES NEURONALEN
NETZMODELLS

PROCÉDÉ, DISPOSITIF, PUCE ET SYSTÈME D'APPRENTISSAGE DE MODÈLE DE RÉSEAU
NEURONAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2016 CN 201611073994**

(43) Date of publication of application:
**18.09.2019 Bulletin 2019/38**

(73) Proprietor: **Huawei Technologies Co., Ltd.
Longgang District
Shenzhen, Guangdong 518129 (CN)**

(72) Inventors:
• **ZHANG, Changzheng
Shenzhen
Guangdong 518129 (CN)**
• **BAI, Xiaolong
Shenzhen
Guangdong 518129 (CN)**
• **TU, Dandan
Shenzhen
Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
**CN-A- 104 346 629      CN-A- 104 978 601
CN-A- 105 184 367      CN-A- 106 156 807
US-A1- 2015 324 690    US-A1- 2016 267 380
US-A1- 2016 321 776**

• **ZHANG SHANSHAN ET AL: "Asynchronous
stochastic gradient descent for DNN training",
ICASSP, IEEE INTERNATIONAL CONFERENCE
ON ACOUSTICS, SPEECH AND SIGNAL
PROCESSING - PROCEEDINGS 1999 IEEE, IEEE,
26 May 2013 (2013-05-26), pages 6660-6663,
XP032509184, ISSN: 1520-6149, DOI:
10.1109/ICASSP.2013.6638950 ISBN:
978-0-7803-5041-0 [retrieved on 2013-10-18]**

**Description**

**TECHNICAL FIELD**

The present disclosure relates to the field of machine learning, and the invention in particular relates to a training method and system for a neural network model.

**BACKGROUND**

With rapid development and popularization of computers and information technologies, industry application data has exploded. Big data of industries and enterprises on a trillionbyte (TB) or even petabyte (PB) scale often implies in-depth knowledge and value that are not available in a small amount of data. Data analysis led by large-scale machine learning (including deep learning) is a key technology for transforming big data into useful knowledge. Google, Facebook, Microsoft, Baidu and other large domestic and foreign Internet companies have set up specialized big-data-based machine learning and artificial intelligence research and development institutions to deeply and systematically study big-data-based machine learning and intelligent computing technologies.

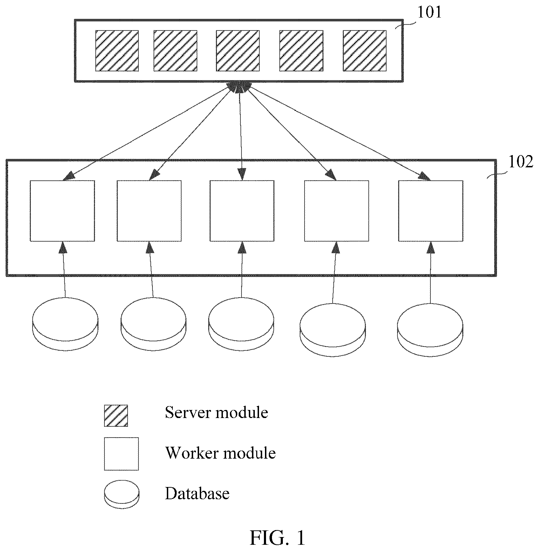

Currently, a parameter server computing architecture is relatively commonly used to deploy large-scale machine learning algorithms in large-scale distributed parallel computing systems, in combination with an effective stochastic gradient descent algorithm for training. FIG. 1 is an example of a schematic diagram of a distributed training system. As shown in FIG. 1, the system includes a server module set 101 and a worker module set 102. The server module set may include a plurality of server modules. The worker module set may include a plurality of worker modules. The server module is similar to a master server node. The worker module may represent a calculation performer. The distributed training system includes a plurality of distributed nodes. Each node may include one or more worker modules, or may further include one or more server modules.

Using FIG. 1 as an example, a signaling interaction process between a server module and a worker module in a distributed system is described in detail. FIG. 1 includes N worker modules and P server modules. The N worker modules and the P server modules are configured to train a model parameter in a neural network model. In this example, one model parameter is trained.

First, a distributed computing platform is started, and an application is deployed. A server module performs initialization, to obtain an initialized model parameter $\omega_1$. A global model parameter $\omega_1$ is pulled from the server module to each worker module.

Second, each worker module performs a first iteration: reading sample data, and calculating a local gradient based on the global model parameter $\omega_1$, where a worker module 1 obtains a local gradient $\Delta\omega_{1-1}$ through calculation, a worker module 2 obtains a local gradient $\Delta\omega_{2-1}$ through calculation, ..., and a worker module N obtains a local gradient $\Delta\omega_{N-1}$ through calculation.

Third, each worker module performs a second iteration: pushing, by the worker modules, the local gradient $\Delta\omega_{1-1}$, the local gradient $\Delta\omega_{2-1}$, ..., and the local gradient $\Delta\omega_{N-1}$ that are generated in the first iteration to the server module, and calculating, by the server module, a global gradient $\omega_{1\_1}$ based on the local gradient $\Delta\omega_{1-1}$, the local gradient $\Delta\omega_{2-1}$, ..., and the local gradient $\Delta\omega_{N-1}$; pulling the global gradient $\omega_{1\_1}$ from the server module to each worker module; and updating, by each worker module, the local model parameter $\omega_1$ to a model parameter $\omega_2$ based on the global gradient $\Delta\omega_{1\_1}$.

Each worker module reads the sample data, and calculates a local gradient based on the global model parameter $\omega_2$, where the worker module 1 obtains a local gradient $\Delta\omega_{1-2}$ through calculation, the worker module 2 obtains a local gradient $\Delta\omega_{2-2}$ through calculation, ..., and the worker module N obtains a local gradient $\Delta\omega_{N-2}$ through calculation.

Fourth, in subsequent iterations, the worker modules push respective local gradients to the server module, to pull a global gradient again from the server module, so that each worker module updates a local model parameter based on the global gradient pulled from the server module and calculates a gradient.

Fifth, after repeated iterations, each worker module reports a local model parameter updated for the last time to the server module, and the server module determines an average value based on the updated local model parameter reported by each worker module, to obtain a trained model parameter. This process may be referred to as a training period (which may be referred to as an epoch), and the model parameter may be trained by using a plurality of training periods.

It can be learned from the foregoing descriptions that, for each model parameter in an iteration, each worker module first pushes the local gradient to the server module, waits until the global gradient of the model parameter is pulled from the server module, then updates the local model parameter based on the global gradient, and then calculates the local gradient based on the updated local model parameter. It can be learned that a time taken by each iteration process includes a communication time of pushing the local gradient to the server module, a communication time of pulling the global gradient to the server module, a time of updating the local model parameter, and a time of calculating the local gradient. Consequently, one iteration takes a relatively long time, resulting in a large delay in a model parameter training process. ZHANG SHANSHAN el al: "Asynchronous stochastic gradient descent for DNN training" discloses an approach to manage multiple GPUs to work asynchronously to calculate gradients and update the global model parameters.

**SUMMARY**

The present invention provides a training method, a computer storage medium, and a system for training a neural network model, to solve the object to reduce a model parameter training delay and improve model parameter training efficiency. This object is solved by a training method according to claim 1, a computer storage medium according to claim 7, and a system according to claim 6 for training a neural network model. Further advantageous embodiments and improvements of the present invention are listed in the dependent claims. Hereinafter, Hereinafter, "...aspect according to the invention" relates to the broadest embodiment as claimed with the independent claims. Terms like "implementation", "optionally", according to an embodiment", "design" or similar expressions relate to advantageous embodiments of the invention. "according to the present disclosure", "the disclosure describes", "according to a(an)...aspect" or similar relate to further aspects which are not directly claimed but which contribute to the understanding of the invention as claimed.

According to a first aspect according to the invention,the invention provides a training method for a neural network model. The invention is applicable to a training system that includes a server module and N worker modules, the server module and the N worker modules are configured to train a model parameter within at least one training period, each of the at least one training period includes K iterations, and for an $i^{th}$ iteration of one of the N worker modules within each training period, each worker module performs in parallel the following steps: calculating a model parameter of an $(i+1)^{th}$ iteration based on a local gradient of the $i^{th}$ iteration and a model parameter of the $i^{th}$ iteration, and if i is less than K, calculating a local gradient of the $(i+1)^{th}$ iteration based on the model parameter of the $(i+1)^{th}$ iteration and sample data of the $(i+1)^{th}$ iteration; and pulling, by the worker module, a global gradient of an $r^{th}$ iteration from the server module and/or pushing, by the worker module, a local gradient of an $f^{th}$ iteration to the server module.

According to the invention, a first process and a second process are executed in parallel in each iteration process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art problem in which a model parameter of an $(i+1)^{th}$ iteration can be calculated only after waiting until a global gradient of an $i^{th}$ iteration is pulled from a server module, thereby reducing duration of an iteration and improving model parameter training efficiency.

Optionally, the calculating, by the worker module, a model parameter of an $(i+1)^{th}$ iteration based on a local gradient of the $i^{th}$ iteration and a model parameter of the $i^{th}$ iteration includes: calculating, by the worker module if determining that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency.

Optionally, the calculating, by the worker module, a model parameter of an $(i+1)^{th}$ iteration based on a local gradient of the $i^{th}$ iteration and a model parameter of the $i^{th}$ iteration includes: calculating, by the worker module if determining that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, there is no need to wait for the communication process, thereby further reducing the iteration duration and improving the model parameter training efficiency. Optionally, the first condition further includes: the global gradient of the $j^{th}$ iteration is a global gradient in an iteration with a largest iteration batch number in all global gradients that have been pulled from the server module. In this way, a model parameter can be updated based on a global gradient in an iteration nearest to a current iteration process, thereby accelerating model parameter convergence.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the worker module and the server module can work more flexibly, and an amount of communication between the worker module and the server module is further reduced.

Optionally, the pulling, by the worker module, a global gradient of an $r^{th}$ iteration from the server module and/or pushing, by the worker module, a local gradient of an $f^{th}$ iteration to the server module includes: pulling the global gradient of the $r^{th}$ iteration from the server module; or pulling the global gradient of the $r^{th}$ iteration from the server module, and pushing a local gradient of an $(i-1)^{th}$ iteration to the server module; or pulling the global gradient of the $r^{th}$ iteration from the server module, and pushing the local gradient of the $i^{th}$ iteration to the server module; or pushing a local gradient of an $(i-1)^{th}$ iteration to the server module; or pushing the local gradient of the $i^{th}$ iteration to the server module. In this way, flexibility of the worker module can be improved, and on the other hand, a local gradient in an iteration nearest to a current iteration process can be pushed to the server module as much as possible, thereby accelerating model parameter convergence.

Optionally, if i is K, the method further includes: pushing, by the worker module, a model parameter of a $(K+1)^{th}$ iteration to the server module after the worker module calculates a local gradient of a $K^{th}$ iteration and calculates the model parameter of the $(K+1)^{th}$ iteration based on the local gradient of the $K^{th}$ iteration and a model parameter of the $K^{th}$ iteration, where the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved.

According to a second aspect there is provided a training apparatus for a neural network model, where the training apparatus includes N worker modules, the training apparatus is applicable to a training system that includes a server module and the N worker modules, the server module and the N worker modules are configured to train a model parameter within at least one training period, and each of the at least one training period includes K iterations; each of the N worker modules includes a communications module and a calculation module; and for an $i^{th}$ iteration of one of the N worker modules within each training period, where N and K each are an integer greater than or equal to 1, and i is an integer greater than or equal to 1 and less than or equal to K: the communications module and the calculation module of each worker module run in parallel, where the calculation module is configured to: calculate a model parameter of an $(i+1)^{th}$ iteration based on a local gradient of the $i^{th}$ iteration and a model parameter of the $i^{th}$ iteration, and if i is less than K, calculate a local gradient of the $(i+1)^{th}$ iteration based on the model parameter of the $(i+1)^{th}$ iteration and sample data of the $(i+1)^{th}$ iteration; and the communications module is configured to: pull a global gradient of an $r^{th}$ iteration from the server module and/or push a local gradient of an $f^{th}$ iteration to the server module, where r and f each are a positive integer less than or equal to i.

In this embodiment of this application, the communications module and the calculation module run in parallel in each iteration process, the communications module executes a first process, and the calculation module executes a second process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

Optionally, the calculation module is configured to: calculate, if it is determined that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, there is no need to wait for the communication process, thereby further reducing the iteration duration and improving the model parameter training efficiency.

Optionally, the calculation module is configured to: calculate, if it is determined that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, a model parameter can be updated based on a global gradient in an iteration nearest to a current iteration process, thereby accelerating model parameter convergence.

Optionally, the first condition further includes: the global gradient of the $j^{th}$ iteration is a global gradient in an iteration with a largest iteration batch number in all global gradients that have been pulled from the server module. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the worker module and the server module can work more flexibly, and an amount of communication between the worker module and the server module is further reduced.

Optionally, the communications module is configured to: pull the global gradient of the $r^{th}$ iteration from the server module; or pull the global gradient of the $r^{th}$ iteration from the server module, and push a local gradient of an $(i-1)^{th}$ iteration to the server module; or pull the global gradient of the $r^{th}$ iteration from the server module, and push the local gradient of the $i^{th}$ iteration to the server module; or push a local gradient of an $(i-1)^{th}$ iteration to the server module; or push the local gradient of the $i^{th}$ iteration to the server module. In this way, flexibility of the worker module can be improved, and on the other hand, a local gradient in an iteration nearest to a current iteration process can be pushed to the server module as much as possible, thereby accelerating model parameter convergence.

Optionally, if i is K, the communications module is further configured to: push a model parameter of a $(K+1)^{th}$ iteration to the server module after the calculation module is used to calculate a local gradient of a $K^{th}$ iteration and calculate the model parameter of the $(K+1)^{th}$ iteration based on the local gradient of the $K^{th}$ iteration and a model parameter of the $K^{th}$ iteration, where the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved.

According to a third aspect, an embodiment of this application provides a training apparatus for a neural network model, where the training apparatus includes a processor, a memory, and a transceiver, the processor includes N processor cores, the training apparatus is applicable to a training system that includes a server module and N processor cores, the server module and the N processor cores are configured to train a model parameter within at least one training period, and each of the at least one training period includes K iterations, where
the memory is configured to store an instruction; the processor is configured to:
execute the instruction stored in the memory, and control the transceiver to transmit data to the server module; and
when the processor executes the instruction stored in the memory, each of the N processor cores is configured to:

calculate a model parameter of an $(i+1)^{th}$ iteration based on a local gradient of an $i^{th}$ iteration and a model parameter of the $i^{th}$ iteration, and if i is less than K, calculate a local gradient of the $(i+1)^{th}$ iteration based on the model parameter of the $(i+1)^{th}$ iteration and sample data of the $(i+1)^{th}$ iteration;
the transceiver is configured to: pull a global gradient of an $r^{th}$ iteration from the server module and/or push a local gradient of an $f^{th}$ iteration to the server module, where r and f each are a positive integer less than or equal to i; and
the memory is configured to store the global gradient pulled from the server module and the calculated local gradient.

In this embodiment of this application, the transceiver and the processor run in parallel in each iteration process, the processor executes a first process, and the transceiver executes a second process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency. Optionally, the processor is configured to: calculate, if determining that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, there is no need to wait for the communication process, thereby further reducing the iteration duration and improving the model parameter training efficiency.

Optionally, the processor is configured to: calculate, if determining that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, a model parameter can be updated based on a global gradient in an iteration nearest to a current iteration process, thereby accelerating model parameter convergence.

Optionally, the first condition further includes: the global gradient of the $j^{th}$ iteration is a global gradient in an iteration with a largest iteration batch number in all global gradients that have been pulled from the server module. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the worker module and the server module can work more flexibly, and an amount of communication between the worker module and the server module is further reduced.

Optionally, the transceiver is configured to: pull the global gradient of the $r^{th}$ iteration from the server module; or pull the global gradient of the $r^{th}$ iteration from the server module, and push a local gradient of an $(i-1)^{th}$ iteration to the server module; or pull the global gradient of the $r^{th}$ iteration from the server module, and push the local gradient of the $i^{th}$ iteration to the server module; or push a local gradient of an $(i-1)^{th}$ iteration to the server module; or push the local gradient of the $i^{th}$ iteration to the server module. In this way, flexibility of the worker module can be improved, and on the other hand, a local gradient in an iteration nearest to a current iteration process can be pushed to the server module as much as possible, thereby accelerating model parameter convergence.

Optionally, if i is K, the transceiver is further configured to: push a model parameter of a $(K+1)^{th}$ iteration to the server module after the processor is used to calculate a local gradient of a $K^{th}$ iteration and calculate the model parameter of the $(K+1)^{th}$ iteration based on the local gradient of the $K^{th}$ iteration and a model parameter of the $K^{th}$ iteration, where the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved.

According to a fourth aspect, an embodiment of this application provides a training chip for a neural network model, where the chip is applicable to a training system that includes N chips and a server, the server module and the N chips are configured to train a model parameter within at least one training period, and each of the at least one training period includes K iterations; and each of the N chips is configured to perform the method performed by the worker module in the first aspect.

According to a fifth aspect according to the invention, the invention provides a training system for a neural network model, where the system includes a server module and N worker modules, the server module and the N worker modules are configured to train a model parameter within at least one training period, and each of the at least one training period includes K iterations; for an $i^{th}$ iteration of one of the N worker modules within each training period, each worker module is configured to perform in parallel the following steps: calculating a model parameter of an $(i+1)^{th}$ iteration based on a local gradient of the $i^{th}$ iteration and a model parameter of the $i^{th}$ iteration, and if i is less than K, calculating a local gradient of the $(i+1)^{th}$ iteration based on the model parameter of the $(i+1)^{th}$ iteration and sample data of the $(i+1)^{th}$ iteration; and pulling a global gradient of an $r^{th}$ iteration from the server module and/or pushing a local gradient of an $f^{th}$ iteration to the server module, where r and f each are a positive integer less than or equal to i, where N and K each are an integer greater than or equal to 1, and i is an integer greater than or equal to 1 and less than or equal to K; and the server module is configured to: calculate the global gradient of the $r^{th}$ iteration based on a received local gradient of the $r^{th}$ iteration that is pushed by the worker module, and pull the global gradient of the $r^{th}$ iteration to the worker module; and receive the local gradient of the $f^{th}$ iteration that is pushed by the worker module, and calculate a global gradient of the $f^{th}$ iteration based on the local gradient of the $f^{th}$ iteration that is pushed by the worker module.

According to a sixth aspect according to the invention, a computer program product is provided, where the computer program product includes a computer program (which may also be referred to as code or an instruction), and when run, the computer program causes a computer to perform the method according to any possible implementation of the first aspect.

According to a seventh aspect, a computer readable medium is provided, where the computer readable medium stores a computer program, and when run on a computer, the computer program causes the computer to perform the method according to any possible implementation of the first aspect.

In the present invention, the first process and the second process are executed in parallel in each iteration process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

**Brief description of drawings**

FIG. 1 is a schematic diagram of a distributed training system shown in the background;
FIG. 2 is a schematic architectural diagram of an application scenario applicable to an embodiment of this application;
FIG. 3 is a schematic diagram of an applicable training system according to an embodiment of this application;
FIG. 4 is a schematic flowchart of a training method for a neural network model according to an embodiment of this application;
FIG. 5 is a schematic flowchart of a training method for a neural network model according to an embodiment of this application;
FIG. 6 is a schematic structural diagram of a training apparatus for a neural network model according to an embodiment of this application;
FIG. 7 is a schematic structural diagram of a training apparatus for a neural network model according to an embodiment of this application; and
FIG. 8 is a schematic structural diagram of a training system for a neural network model according to an embodiment of this application.

**DESCRIPTION OF EMBODIMENTS**

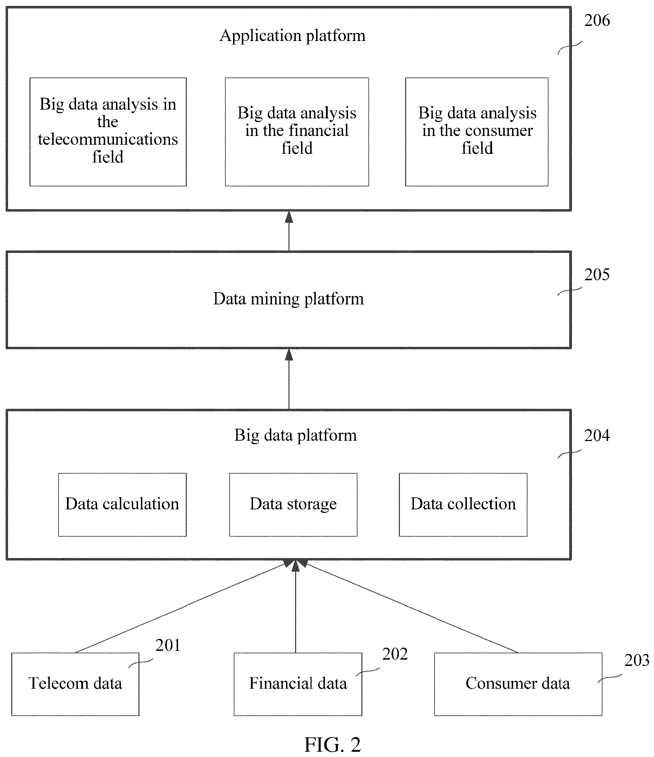

FIG. 2 is an example of a schematic architectural diagram of an application scenario applicable to an embodiment of this application. As shown in FIG. 2, in a specific implementation, there may be various raw data, for example, telecom data 201, financial data 202, and consumer data 203 in FIG. 2. A big data platform 204 performs data collection, data storage, data calculation, or the like on the raw data. Then data processed by the big data platform 204 is obtained. A data mining platform 205 obtains, from the big data platform, the data processed by the big data platform 204, and performs data mining, for example, performs data mining by using a deep learning module such as logistic regression analysis (LR), a large-scale traditional neural network model Latent Dirichlet Allocation (LDA), a convolutional neural network (CNN), a recurrent neural network (RNN), a sparse autoencoder (SAE), to obtain a data mining result. An application platform 206 includes various fields, and can perform, based on the data mining result determined by the data mining platform 205, big data analysis in the telecommunications field, big data analysis in the financial field, big data analysis in the consumer field, big data analysis in another field, and the like.

This embodiment of this application may be used to train a distributed parallel computer cluster of massive data. Suitable algorithms include various deep learning algorithms such as a convolutional neural network (for image, speech, or video processing), a recursive neural network (for natural language processing), and a deep neural network (for speech processing), and a large-scale machine learning algorithm.

The solution provided in this embodiment of this application is applied to the data mining platform 205. The data mining platform 205 can perform mining analysis on underlying raw data through deep learning intelligent analysis, and improve, through an accelerated training process of a distributed architecture, performance and scalability of the data mining platform trained based on the deep learning, thereby supporting decision-making and operation of an upper-layer application platform, such as video analysis, image recognition, object detection, natural language processing, and other upper-layer application platform services.

In this embodiment of this application, a node may be a computer device that includes at least one graphics processing unit (GPU) chip and/or at least one central processing unit (CPU) chip. Each GPU chip includes one or more GPU cores. Each CPU chip includes one or more CPU cores. In this embodiment of this application, a worker module may include one or more GPU cores, and a server module may include one or more CPU cores.

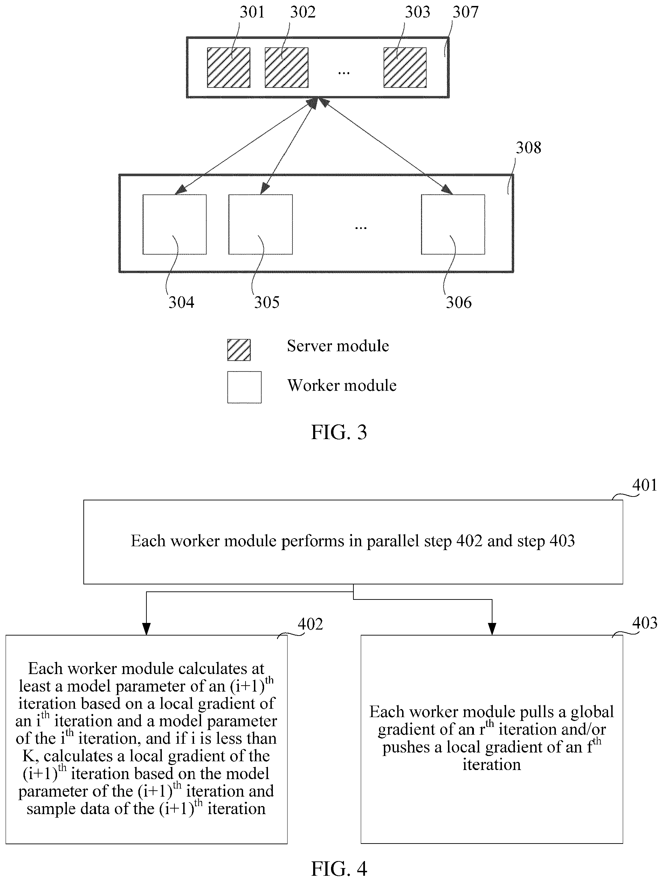

For ease of description, a plurality of server modules may be referred to as a server module set, and a plurality of worker modules may be referred to as a worker module set. FIG. 3 is an example of a schematic diagram of an applicable system architecture according to an embodiment of this application. As shown in FIG. 3, this embodiment of this application includes a server module set 307 and a worker module set 308. The server module set 307 includes a plurality of server modules, which are separately a server module 301, a server module 302, ..., and a server module 303. The worker module set 308 may include a plurality of worker modules, which are separately a worker module 304, a worker module 305, ..., and a worker module 306.

A distributed system architecture includes a plurality of distributed nodes. There are three types of specific deployment forms for each node. In a first form, worker modules and server modules are deployed on a same node, and a quantity of the worker modules is the same as or different from a quantity of the server modules. In a second form, worker modules and server modules are respectively deployed on different nodes, and a quantity of the worker modules is the same as or different from a quantity of the server modules. In a third form, worker modules and server modules are deployed on different nodes in a mixed manner. To be specific, at least one of the plurality of nodes includes both worker modules and server modules, and a quantity of the worker modules is the same as or different from a quantity of the server modules. The solution provided in this embodiment of this application is applicable to any specific deployment form.

The server module and the worker module are configured to train a model parameter within at least one training period. Each training period (which may be referred to as an epoch) may include K iterations. The model parameter may be trained in one or more training periods. In this embodiment of this application, one training period is mainly described in detail in the following content. A solution of another training period is similar to the following content and is not further described. Based on the foregoing content, FIG. 4 is an example of a schematic flowchart of a training method for a neural network model according to an embodiment of this application. The training method for a neural network model is applicable to a training system that includes a server module and N worker modules. The server module and the N worker modules are configured to train a model parameter within at least one training period. Each of the at least one training period includes K iterations. For an $i^{th}$ iteration of one of the N worker modules within each training period, where N and K each are an integer greater than or equal to 1, and i is an integer greater than or equal to 1 and less than or equal to K, as shown in FIG. 4, the method includes the following steps.

Step 401: Each worker module performs in parallel step 402 and step 403. The worker module is one of the N worker modules.

Step 402: Each worker module calculates a model parameter of an $(i+1)^{th}$ iteration based on a local gradient of the $i^{th}$ iteration and a model parameter of the $i^{th}$ iteration, and if i is less than K, calculates a local gradient of the $(i+1)^{th}$ iteration based on the model parameter of the $(i+1)^{th}$ iteration and sample data of the $(i+1)^{th}$ iteration.

Step 403: Each worker module pulls a global gradient of an $r^{th}$ iteration from the server module and/or pushes a local gradient of an $f^{th}$ iteration to the server module, where r and f each are a positive integer less than or equal to i. Specifically, there are several solutions. In a first solution, the worker module pulls the global gradient of the $r^{th}$ iteration from the server module. In a second solution, the worker module pushes the local gradient of the $f^{th}$ iteration to the server module. In a third solution, the worker module pulls the global gradient of the $r^{th}$ iteration from the server module and pushes the local gradient of the $f^{th}$ iteration to the server module. Specifically, that the worker module pulls the global gradient of the $r^{th}$ iteration from the server module includes: The worker module receives the global gradient of the $r^{th}$ iteration that is sent by the server module, or the worker module proactively obtains the global gradient of the $r^{th}$ iteration from the server module. The pushing the local gradient of the $f^{th}$ iteration to the server module is specifically: sending, by the worker module, the local gradient of the $f^{th}$ iteration to the server module.

In this embodiment of this application, step 402 and step 403 are performed in parallel in each iteration process. Step 402 is a first process and step 403 is a second process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. On one hand, in the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

On the other hand, in this embodiment of this application, the second process is executed while the first process is executed. This avoids a prior-art problem in which a communication process needs to be executed only after a local gradient of an $(i+1)^{th}$ iteration is calculated, thereby further reducing duration of an iteration and improving model parameter training efficiency.

In this embodiment of this application, the N worker modules and the server module may be located on one node. The node is a computer device that includes a plurality of GPU cores and a plurality of CPU cores. One worker module includes one or more GPU cores, and one server module includes one or more CPU cores. In this case, the N worker modules and the server module may communicate with each other through inter-core communication between the GPU cores and the CPU cores. If the N worker modules and the server module are separately located in a plurality of nodes, the N worker modules and the server module may communicate with each other through some links between the nodes. In this embodiment of this application, each of the N worker modules and the server module can communicate with each other.

Optionally, in step 402, the calculating, by the worker module, a model parameter of an $(i+1)^{th}$ iteration based on a local gradient of the $i^{th}$ iteration and a model parameter of the $i^{th}$ iteration includes: calculating, by the worker module if determining that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$

iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency. The calculating, by the worker module, a model parameter of an $(i+1)^{th}$ iteration based on a local gradient of the $i^{th}$ iteration and a model parameter of the $i^{th}$ iteration includes: calculating, by the worker module if determining that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, there is no need to wait for the communication process, thereby further reducing the iteration duration and improving the model parameter training efficiency.

Specifically, the communication process and the calculation process in the system are two processes independent of each other and can be executed in parallel. Optionally, when executing the communication process, the worker module pushes the local gradient to the server module once and pulls the global gradient from the server module once; or continuously pushes the local gradient to the server module a plurality of times, and pulls the global gradient from the server module once or continuously a plurality of times. Optionally, in step 403, if the server module has calculated the global gradient of the $r^{th}$ iteration, the worker module may pull the global gradient of the $r^{th}$ iteration from the server module in step 403. In another optional solution, in step 403, if the worker module has just completed a process of pushing the local gradient to the server module once, or the worker module turns to a process of pushing the local gradient to the server module, the worker module may choose to push the local gradient of the $f^{th}$ iteration to the server module. In another optional solution, the communication process between the worker module and the server module is executed relatively quickly. During calculation of the model parameter of the $(i+1)^{th}$ iteration and the local gradient of the $(i+1)^{th}$ iteration, the worker module may pull the global gradient of the $r^{th}$ iteration from the server module and push the local gradient of the $f^{th}$ iteration to the server module; or may push the local gradient of the $f^{th}$ iteration to the server module and pull the global gradient of the $r^{th}$ iteration from the server module. In this embodiment of this application, there is no sequential order between pushing the local gradient of the $f^{th}$ iteration to the server module and pulling the global gradient of the $r^{th}$ iteration from the server module. In the foregoing solution, there are a plurality of implementation solutions that the worker module may choose to push the local gradient of the $f^{th}$ iteration to the server module.

The following describes in detail the foregoing content by using an example. The worker module currently has been successfully pulled a global gradient of a first iteration, a global gradient of a third iteration, a global gradient of a fourth iteration, and a global gradient of a sixth iteration from the server module. The global gradient of the first iteration has been used for calculating a model parameter of a second iteration. None of the global gradient of the third iteration, the global gradient of the fourth iteration, and the global gradient of the sixth iteration is used. Currently, a process of a ninth iteration is performed, and a model parameter of the ninth iteration is updated. In other words, the $(i+1)^{th}$ iteration is the ninth iteration. The global gradient of the $j^{th}$ iteration that currently meets the first condition is any one of the global gradient of the third iteration, the global gradient of the fourth iteration, and the global gradient of the sixth iteration. Optionally, the model parameter of the ninth iteration may be calculated based on a local gradient of an eighth iteration, a model parameter of the eighth iteration, and any one of the global gradient of the third iteration, the global gradient of the fourth iteration, and the global gradient of the sixth iteration.

Optionally, the first condition further includes: the global gradient of the $j^{th}$ iteration is a global gradient in an iteration with a largest iteration batch number in all global gradients that have been pulled from the server module. In this way, a model parameter can be updated based on a global gradient in an iteration nearest to a current iteration process, thereby accelerating model parameter convergence. The iteration batch number is a sequence number of an iteration. For example, an iteration batch number of the third iteration is 3. A larger iteration sequence number indicates a larger iteration batch number. With reference to the example, the iteration with the largest iteration batch number in the global gradient of the third iteration, the global gradient of the fourth iteration, and the global gradient of the sixth iteration is the sixth iteration. Therefore, preferably, the $j^{th}$ iteration is determined as the global gradient of the sixth iteration. Optionally, the model parameter of the ninth iteration is calculated based on the global gradient of the sixth iteration, the local gradient of the eighth iteration, and the model parameter of the eighth iteration.

Optionally, in a process of updating the model parameter of the ninth iteration, the communication process may be executed in parallel. In the process of updating the model parameter of the ninth iteration by the worker module, the worker module has calculated local gradients in processes of first eight iterations, and has pushed a local gradient of the first iteration, a local gradient of the third iteration, a local gradient of the fourth iteration, and a local gradient of the sixth iteration to the server module. Local gradients that have not been pushed to the server module include: a local gradient of the second iteration, a local gradient of a fifth iteration, a local gradient of a seventh iteration, and the local gradient of the eighth iteration. Optionally, the worker module may selectively perform the following solutions:

Solution a1: In processes of updating the model parameter of the ninth iteration and calculating a local gradient of the ninth iteration, the worker module performs in parallel the following step: pulling the global gradient of the $r^{th}$ iteration from the server module. Assuming that the worker module has pushed the local gradient of the fifth iteration to the server module and the server module has calculated a global gradient of the fifth iteration, but the worker module has not performed pulling from the server module, the worker module may pull the global gradient of the fifth iteration from the server module. In other words, in this embodiment of this application, the worker module may perform in parallel the following step: pulling the global gradient of the $r^{th}$ iteration from the server module, and the global gradient of the $r^{th}$ iteration has been calculated by the server module.

Solution a2: In processes of updating the model parameter of the ninth iteration and calculating the local gradient of the ninth iteration, the worker module performs in parallel the following steps: pulling the global gradient of the $r^{th}$ iteration from the server module and pushing the local gradient of the $f^{th}$ iteration to the server module; or pushing the local gradient of the $f^{th}$ iteration to the server module. There are a plurality of cases for pushing the local gradient of the $f^{th}$ iteration to the server module, including a solution b1, a solution b2, a solution b3, a solution b4, and the like as follows:

Solution b1: The worker module determines one local gradient in local gradients that have not been pushed to the server module, and pushes the determined local gradient to the server module. For example, the worker module selects any one of the local gradient of the second iteration, the local gradient of the fifth iteration, the local gradient of the seventh iteration, and the local gradient of the eighth iteration, and pushes the selected local gradient to the server module.

Solution b2: A local gradient of an $(i-1)^{th}$ iteration is pushed to the server module. The worker module selects a local gradient with the second largest iteration batch number that has not been pushed to the server module, and pushes the selected local gradient to the server module. For example, the worker module selects the local gradient of the seventh iteration from the local gradient of the second iteration, the local gradient of the fifth iteration, the local gradient of the seventh iteration, and the local gradient of the eighth iteration, and pushes the selected local gradient to the server module.

Solution b3: The local gradient of the $i^{th}$ iteration is pushed to the server module. The worker module selects a local gradient with the largest iteration batch number that has not been pushed to the server module, and pushes the selected local gradient to the server module. For example, the worker module selects the local gradient of the eighth iteration from the local gradient of the second iteration, the local gradient of the fifth iteration, the local gradient of the seventh iteration, and the local gradient of the eighth iteration, and pushes the selected local gradient to the server module. Solution b4: The worker module may keep waiting, and push the local gradient of the $(i+1)^{th}$ iteration to the server module. To be specific, the worker module waits until the local gradient of the ninth iteration is determined, and then pushes the local gradient of the ninth iteration to the server module.

It can be learned from the foregoing solution that, in this embodiment of this application, during the $(i+1)^{th}$ iteration, the local gradient of the $f^{th}$ iteration that has been calculated may be selected and pushed to the server module, or the global gradient of the $r^{th}$ iteration that has been calculated by the server module may be selected and pulled from the server module, without a need to report a local gradient in each iteration that is calculated by the worker module and pull a global gradient in each iteration from the server module, thereby reducing an amount of communication between the worker module and the server module.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the worker module and the server module can work more flexibly, and the amount of communication between the worker module and the server module is further reduced. For example, there are 50 worker modules in total, N is 50, and M is 20. The worker module may calculate the global gradient of the $j^{th}$ iteration based on local gradients of the $j^{th}$ iteration that are reported by 20 worker modules. Optionally, the global gradient of the $j^{th}$ iteration may be calculated based on local gradients of the $j^{th}$ iteration that are reported by all of the N worker modules.

Optionally, in the foregoing solution, the server module may calculate the global gradient of the $j^{th}$ iteration based on all local gradients of the $j^{th}$ iteration that are reported by a plurality of worker modules. There are various specific algorithms for calculating a global gradient based on a local gradient, such as averaging, weighting calculation, and averaging for several local gradients with large weights. A schematic description is provided by using several examples. For example, the server module averages all the local gradients of the $j^{th}$ iteration that are reported by the plurality of worker modules, to obtain the global gradient of the $j^{th}$ iteration. For another example, the server module multiplies all the local gradients of the $j^{th}$ iteration that are reported by the plurality of worker modules by corresponding weights, and then calculates an average value of the local gradients that have been multiplied by the weights, to obtain the global gradient of the $j^{th}$ iteration. Optionally, if i is K, the method further includes: pushing, by the worker module, a model parameter of a $(K+1)^{th}$ iteration to the server module after the worker module calculates a local gradient of a $K^{th}$ iteration and calculates the model parameter of the $(K+1)^{th}$ iteration based on the local gradient of the $K^{th}$ iteration and a model parameter of the $K^{th}$ iteration. The model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved. For example, the model parameters of the $(K+1)^{th}$ iteration that are pushed by all of the N worker modules to the server module are averaged, or a solution of dividing a sum of the model parameters of the $(K+1)^{th}$ iteration that are pushed by all of the N worker modules to the server module by the iteration quantity K is used, to obtain the model parameter trained in the training period. Optionally, another training period may be started to train the model parameter. In this case, the model parameter obtained through training in this training period is determined as a model parameter of a first iteration within a next training period. Alternatively, no training period may be started any longer, and the model parameter obtained through training in this training period is determined as a trained model parameter.

To further describe the solution provided in this embodiment of this application, the method includes:

A distributed computing platform is started, and an application is deployed. The server module performs initialization, to obtain an initialized model parameter $\omega_{1\_0}$. The model parameter $\omega_{1\_0}$ is pulled from the server module to each worker module.

The worker module performs a first iteration.

GPUs of the worker modules separately read sample data of the first iteration, calculate local gradients based on the global model parameter $\omega_{1\_0}$, and preprocess sample data of a second iteration at the same time. In this way, a time of a training period can be further reduced. Subsequently, a model parameter of the second iteration is calculated.

For example, in the N worker modules, a worker module 1 obtains a local gradient $\Delta\omega_{1\text{-}1}$ through calculation, the worker module 2 obtains a local gradient $\Delta\omega_{2\text{-}1}$ through calculation, ..., the worker module n obtains a local gradient $\Delta\omega_{n\text{-}1}$ through calculation, ..., and the worker module N obtains a local gradient $\Delta\omega_{N\text{-}1}$ through calculation.

The worker module performs the second iteration.

Optionally, the worker module performs in parallel the following steps: calculating the model parameter of the second iteration, calculating a local gradient of the second iteration, and pushing a local gradient of the first iteration to the server module. Optionally, after the server module calculates a global gradient of the first iteration, the worker module may pull the global gradient of the first iteration from the server module.

Because the global gradient has not been pulled from the server module in this case, the model parameter of the second iteration is determined based on a model parameter of the first iteration and the local gradient of the first iteration. Specifically, there are various determining solutions. For example, the model parameter of the second iteration is made more approximate to a final value through error calculation. Optionally, a formula (1) for a worker module n to calculate the model parameter of the $(i+1)^{th}$ iteration is provided:

$$ w_{n\_i} = w_{n\_i\text{-}1} + \eta \cdot \Delta w_{n\_i} \text{ ... formula (1)} $$

In the formula (1):

$w_{n\_i}$ is the model parameter of the $(i+1)^{th}$ iteration of the worker module n;
i is the iteration quantity, a value range of i is [1, K], and a value range of n is [1, N];
$w_{n\_i\text{-}1}$ is the model parameter of the $i^{th}$ iteration;
$\Delta w_{n\_i}$ is the local gradient obtained through calculation by the worker module n in i iterations; and
$\eta$ is a learning rate control factor. $\eta$ may be determined based on a specific applicable scenario.

In this example, the model parameter of the second iteration is calculated by using the foregoing formula (1).

The GPUs of the worker modules separately read the preprocessed sample data of the second iteration, and then perform in parallel the following content: calculating the local gradient based on the model parameter of the second iteration, and preprocessing sample data of a third iteration.

The worker module pushes the local gradient of the first iteration to the server module. For example, the server module may receive N local gradients $\Delta\omega_{1\text{-}2}$, $\Delta\omega_{2\text{-}2}$, ..., $\Delta\omega_{n\text{-}2}$, ..., and $\Delta\omega_{N\text{-}2}$ of the first iteration that are respectively reported by the N worker modules, and optionally calculate an average value of the N local gradients of the first iteration, to obtain the global gradient $\Delta\omega_1$ of the first iteration. In this way, the local gradient of the first iteration is pushed to the server module while the local gradient of the second iteration is calculated, so that time windows of a calculation process and a communication process overlap, thereby reducing a time of a training period. Optionally, an average value of local gradients of the first iteration may be calculated based on M local gradients of the first iteration that are reported by M of the N worker modules, to obtain the global gradient of the first iteration.

The worker module performs the third iteration.

Optionally, if the worker module has not pulled the global gradient of the first iteration from the server module, the worker module performs in parallel the following steps: calculating a model parameter of the third iteration, calculating a local gradient of the third iteration, and pulling the global gradient $\Delta\omega_1$ of the first iteration from the server module. In this way, the global gradient of the first iteration is pulled from the server module while the model parameter of the third iteration is calculated and the local gradient of the third iteration is calculated, so that time windows of a calculation process and a communication process overlap, thereby reducing a time of a training period.

Because the global gradient has not been pulled from the server module in this case, in other words, there is no global gradient of the $j^{th}$ iteration that meets the first condition, the model parameter of the third iteration is determined based on the model parameter of the second iteration and the local gradient of the second iteration. Optionally, the model parameter of the third iteration is determined by using the foregoing formula (1).

The GPUs of the worker modules separately read the preprocessed sample data of the third iteration, and then perform in parallel the following content: calculating the local gradient based on the model parameter of the third iteration, and preprocessing sample data of a fourth iteration.

The worker module performs the fourth iteration.

Optionally, the worker module performs in parallel the following steps: calculating a model parameter of the fourth iteration, calculating a local gradient of the fourth iteration, and pushing the local gradient of the third iteration to the server module. Alternatively, the worker module does not push the local gradient to the server module and does not pull the global gradient from the server module while calculating a model parameter of the fourth iteration and calculating a local gradient of the fourth iteration. In this way, an amount of communication between the worker module and the server module is reduced. In this embodiment of this application, a description is provided by using an example in which the local gradient is not pushed to the server module and the global gradient is not pulled from the server module.

Because the global gradient of the first iteration has been pulled from the server module and the global gradient of the first iteration has not been used for updating the model parameter in this case, the model parameter of the fourth iteration is determined based on the model parameter of the third iteration, the local gradient of the third iteration, and the global gradient of the first iteration that is pulled from the server module. Specifically, there are various determining solutions. For example, the model parameter of the fourth iteration is made more approximate to a final value through error calculation. Optionally, a formula (2) for the worker module n to calculate the model parameter of the fourth iteration is provided:

$$w_{n\_i} = w_{n\_i\text{-}1} + \lambda \cdot \Delta w_{n\_i} + \chi \cdot \Delta w_j \text{ ... formula (2)}$$

In the formula (2):

$w_{n\_i}$ is the model parameter of the $(i+1)^{th}$ iteration of the worker module n;

a value range of n is [1, N], i is the iteration quantity, and a value range of i is [1, K];

$w_{n\_i\text{-}1}$ is the model parameter of the $i^{th}$ iteration of the worker module n;

$\Delta w_{n\text{-}i}$ is the local gradient obtained through calculation by the worker module n in i iterations;

$\Delta w_j$ is the global gradient of the $j^{th}$ iteration; and j is a positive integer less than or equal to i; and

$\lambda$ and $\chi$ each are a learning rate control factor. $\lambda$ and $\chi$ may be separately determined based on a specific applicable scenario.

The GPUs of the worker modules separately read the preprocessed sample data of the fourth iteration, and then perform in parallel the following content: calculating the local gradient based on the model parameter of the fourth iteration, and preprocessing sample data of a fifth iteration. In this way, the local gradients are used for calculation in the first three iterations, and the global gradient is used for calculation in the fourth iteration, thereby ensuring that the model parameter more quickly and accurately approximates to a correct value.

The worker module performs the fifth iteration.

Optionally, the worker module performs in parallel the following steps: calculating a model parameter of the fifth iteration, calculating a local gradient of the fifth iteration, and pushing the local gradient of the fourth iteration to the server module. Alternatively, the worker module performs in parallel the following steps: calculating a model parameter of the fifth iteration, calculating a local gradient of the fifth iteration, and pushing the local gradient of the third iteration to the server module. In this embodiment of this application, the following content is described by using an example in which the local gradient of the fourth iteration is pushed to the server module. Because only the global gradient of the first iteration is pulled from the server module in this case, but the global gradient of the first iteration has been used for calculating the model parameter of the fourth iteration, the model parameter of the fifth iteration is determined based on the model parameter of the fourth iteration and the local gradient of the fourth iteration, as shown in the formula (1).

The GPUs of the worker modules separately read the preprocessed sample data of the fifth iteration, and then perform in parallel the following content: calculating the local gradient based on the model parameter of the fifth iteration, and preprocessing sample data of a sixth iteration. In this way, the server module may receive n local gradients $\Delta\omega_{1\text{-}4}$, $\Delta\omega_{2\text{-}4}$, ..., $\Delta\omega_{n\text{-}4}$, ..., and $\Delta\omega_{N\text{-}4}$ of the first iteration that are respectively reported by the n worker modules, and optionally, calculate an average value of the N local gradients of the fourth iteration, to obtain a global gradient $\Delta\omega_4$ of the fourth iteration.

The worker module performs the sixth iteration.

Optionally, the worker module performs in parallel the following steps: calculating a model parameter of the sixth iteration, calculating a local gradient of the sixth iteration, and pulling the global gradient of the fourth iteration from the server module. In this way, the global gradient of the fourth iteration is pulled from the server module while the model parameter of the sixth iteration is calculated and the local gradient of the sixth iteration is calculated, so that time windows of a calculation process and a communication process overlap, thereby reducing a time of a training period.

Optionally, because the worker module has not successfully pulled the global gradient of the fourth iteration from the server module when calculating the model parameter of the sixth iteration, the model parameter of the sixth iteration may be determined by using the foregoing formula (1).

The GPUs of the worker modules separately read the preprocessed sample data of the sixth iteration, and then perform in parallel the following content: calculating the local gradient based on the model parameter of the sixth iteration, and preprocessing sample data of a seventh iteration. In this way, the server module may receive the N local gradients $\Delta\omega_{1\text{-}4}$, $\Delta\omega_{2\text{-}4}$, ..., $\Delta\omega_{n\text{-}4}$, ..., and $\Delta\omega_{N\text{-}4}$ of the first iteration that are respectively reported by the N worker modules, and optionally, calculate the average value of the N local gradients of the fourth iteration, to obtain the global gradient $\Delta\omega_4$ of the fourth iteration.

The worker module performs the seventh iteration.

Optionally, the worker module performs in parallel the following steps: calculating a model parameter of the seventh iteration, calculating a local gradient of the seventh iteration, and pushing the local gradient of the sixth iteration to the server module.

Because the global gradient of the fourth iteration has been pulled from the server module and the global gradient of the fourth iteration has not been used for updating the model parameter in this case, the model parameter of the seventh iteration is determined based on the model parameter of the sixth iteration, the local gradient of the sixth iteration, and the global gradient of the fourth iteration that is pulled from the server module by using the foregoing formula (2).

The GPUs of the worker modules separately read the preprocessed sample data of the seventh iteration, and then perform in parallel the following content: calculating the local gradient based on the model parameter of the seventh iteration, and preprocessing sample data of an eighth iteration. In this way, the local gradients are used for calculation in the fifth iteration and the sixth iteration, and the global gradient is used for calculation in the seventh iteration, thereby ensuring that the model parameter more quickly and accurately approximates to a correct value.

After iterations are repeated, convergence or the iteration quantity meets a requirement. In a last iteration within a current training period (which may be referred to as an epoch in English), that is, the $K^{th}$ iteration, after calculating the local gradient of the $K^{th}$ iteration, the worker module calculates the model parameter of the $(K+1)^{th}$ iteration based on the foregoing formula (1). After receiving local model parameters respectively reported by the N worker modules, the server module calculates a global model parameter of the current training period. There are various specific methods, such as calculating an average value. This embodiment of this application provides a formula (3) for a server to calculate a global model parameter:

$$w_{2\_0} = (w_{1\_K} + w_{2\_K} ... + w_{n\_K} ... + w_{N\_K}) / K \quad \text{... formula (3)}$$

In the formula (3):

$w_{2\_0}$ is the global model parameter, or $w_{2\_0}$ may also be referred to as a model parameter of a first iteration within a next training period;

$w_{m\_K}$ is a local model parameter of the worker module n; and

a value range of n is [1, N]; and K is a total iteration quantity within the training period.

In the foregoing example, a source of sample data may be a local disk (which may be referred to as a disk in English) corresponding to the worker module, or a corresponding distributed storage node, such as a Hadoop distributed file system (Hadoop Distributed File system, HDFS for short), an S3, or a distributed file system (Google File System, GFS for short).

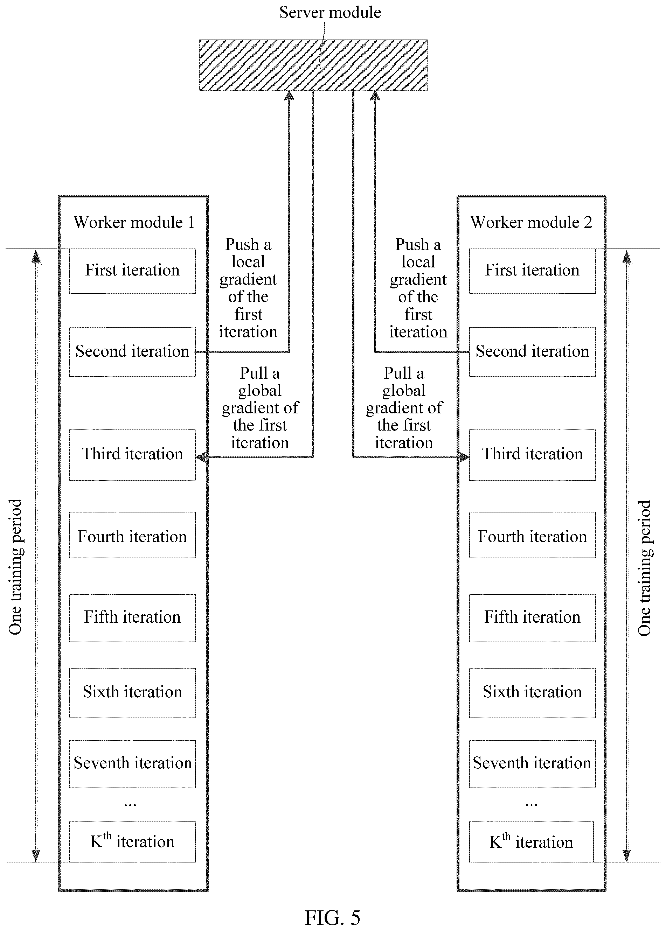

FIG. 5 is an example of a schematic flowchart of a training method for a neural network model. As shown in FIG. 5, the method includes one server module and two worker modules: a worker module 1 and a worker module 2. One training period includes K iterations. In a process of a second iteration, each worker module pushes a local gradient of a first iteration to the server module. In a process of a third iteration, each worker module pulls a global gradient of the first iteration from the server module. In a process of a fifth iteration, each worker module pushes a local gradient of a fourth iteration to the server module. In a process of a sixth iteration, each worker module pulls a global gradient of the fourth iteration from the server module. It can be learned that, in this embodiment of this application, on one hand, the time windows of the calculation process and the communication process overlap, thereby reducing the time of the training period and improving model parameter training efficiency; on the other hand, local gradients and global gradients in only some iterations are respectively pushed to and pulled from the server module, so that the local gradients and the global gradients in all the iterations are prevented from being respectively pushed to and pulled from the server module, thereby reducing the amount of communication between the worker module and the server module.

To further describe the solutions provided in the embodiments of this application, this embodiment of this application provides a specific example below for detailed description. An application scenario of this example is: classifying an image data set by using a deep neural network. The data set in this example is an image recognition database (for example, ImageNet), including 1000 types of 1.28 million images in total. In this example, a neural network is GoogleNet and belongs to one of large-scale neural network models. In this example, a distributed system includes four nodes. Each node includes one server module and one worker module. The server modules and the worker modules are separately: a server module 1, a server module 2, a server module 3, a server module 4, a worker module 1, a worker module 2, a worker module 3, and a worker module 4. Each worker module corresponds to one K80 GPU card (12 G video RAM), and each server module corresponds to one Intel Xeon E5-2620 CPU. Optionally, each worker module further corresponds to a part of the CPU, for preprocessing sample data. GoogleNet is currently a relatively common image classification network with high classification accuracy. A description is provided by using a first iteration as an example.

The first iteration starts.

The server module 1 initializes a global model parameter, to obtain a model parameter of the first iteration. The model parameter of the first iteration complies with $w \square \square (0, 0.01)$. The model parameter of the first iteration is pulled from the server module to the worker modules of the four nodes.

A volume of data processed by all the worker modules in each iteration process is set to 256. The four worker modules calculate gradients based on $w \square (0, 0.01)$, and obtained accumulated gradients are $\Delta w_{1\_1}$ to $\Delta w_{4\_1}$. (A CPU corresponding to a worker module preprocesses a next image, that is, preprocesses sample data of a second iteration, while a GPU of a server module calculates a gradient. This example provides an optional calculation formula (4) for each worker module to calculate a local gradient of the first iteration:

$$\Delta w_{1\_1} = (\Delta w_{1\_1}^{1} + \Delta w_{1\_1}^{2} + \ldots + \Delta w_{1\_1}^{64}) / 64$$

$$\Delta w_{2\_1} = (\Delta w_{2\_1}^{1} + \Delta w_{2\_1}^{2} + \ldots + \Delta w_{2\_1}^{64}) / 64$$

$$\Delta w_{3\_1} = (\Delta w_{3\_1}^{1} + \Delta w_{3\_1}^{2} + \ldots + \Delta w_{3\_1}^{64}) / 64$$

$$\Delta w_{4\_1} = (\Delta w_{4\_1}^{1} + \Delta w_{4\_1}^{2} + \ldots + \Delta w_{4\_1}^{64}) / 64 \ldots \text{formula (4)}$$

In the formula (4), $\Delta w_{1\_1}$ is a local gradient of the first iteration of the worker module 1; $\Delta w_{2\_1}$ is a local gradient of the first iteration of the worker module 2; $\Delta w_{3\_1}$ is a local gradient of the first iteration of the worker module 3; and $\Delta w_{4\_1}$ is a local gradient of the first iteration of the worker module 4.

The second iteration is performed.

Optionally, the worker module performs in parallel the following steps: calculating a model parameter of the second iteration, calculating a local gradient of the second iteration, and pushing the local gradient of the first iteration to the server module. Optionally, after the server module calculates a global gradient of the first iteration, the worker module may pull the global gradient of the first iteration from the server module.

A model parameter of each worker module in the second iteration is calculated based on the foregoing formula (1), and $\eta$ in the formula (1) is set to 0.01. A result shown in a formula (5) is obtained:

$$w_{1\_1} = w_{1\_0} + 0.01\Delta w_{1\_1}$$

$$w_{2\_1} = w_{1\_0} + 0.01\Delta w_{2\_1}$$

$$w_{3\_1} = w_{1\_0} + 0.01\Delta w_{3\_1}$$

$$w_{4\_1} = w_{1\_0} + 0.01\Delta w_{4\_1} \text{ ... formula (5)}$$

In a process of the second iteration, the worker modules calculate respective local gradients of the second iteration based on the respective model parameters of the second iteration, and simultaneously push the local gradients of the first iteration to the server module, and CPUs corresponding to the worker modules preprocess a next image, that is, preprocess sample data of a third iteration. This example provides an optional calculation formula (6) for each worker module to calculate the local gradient of the second iteration:

$$\Delta w_{1\_2} = (\Delta w_{1\_2}^1 + \Delta w_{1\_2}^2 + \ldots + \Delta w_{1\_2}^{64})/64$$

$$\Delta w_{2\_2} = (\Delta w_{2\_2}^1 + \Delta w_{2\_2}^2 + \ldots + \Delta w_{2\_2}^{64})/64$$

$$\Delta w_{3\_2} = (\Delta w_{3\_2}^1 + \Delta w_{3\_2}^2 + \ldots + \Delta w_{3\_2}^{64})/64$$

$$\Delta w_{4\_2} = (\Delta w_{4\_2}^1 + \Delta w_{4\_2}^2 + \ldots + \Delta w_{4\_2}^{64})/64 \text{ ... formula (6)}$$

In the formula (6):

$\Delta w_{1\_2}$ is a local gradient of the second iteration of the worker module 1;

$\Delta w_{2\_2}$ is a local gradient of the second iteration of the worker module 2;

$\Delta w_{3\_2}$ is a local gradient of the second iteration of the worker module 3; and

$\Delta w_{4\_2}$ is a local gradient of the second iteration of the worker module 4.

The third iteration is performed.

Optionally, if the worker module has not pulled the global gradient of the first iteration from the server module, the worker module performs in parallel the following steps: calculating a model parameter of the third iteration, calculating a local gradient of the third iteration, and pulling the global gradient $\Delta\omega_1$ of the first iteration from the server module. If the worker module has not pulled the global gradient of the first iteration from the server module, the worker module calculates a model parameter of each worker module in the third iteration based on the foregoing formula (1), and $\eta$ in the formula (1) is set to 0.01. A result shown in a formula (7) is obtained:

$$w_{1\_2} = w_{1\_1} + 0.01\Delta w_{1\_2}$$

$$w_{2\_2} = w_{2\_1} + 0.01\Delta w_{2\_2}$$

$$w_{3\_2} = w_{3\_1} + 0.01\Delta w_{3\_2}$$

$$w_{4\_2} = w_{4\_1} + 0.01\Delta w_{4\_2} \dots \text{formula (7)}$$

In the formula (7):

$w_{1\_2}$ is a model parameter of the third iteration of the worker module 1; $w_{1\_1}$ is a model parameter of the second iteration of the worker module 1; and $\Delta w_{1\_2}$ is the local gradient of the second iteration of the worker module 1;

$w_{2\_2}$ is a model parameter of the third iteration of the worker module 2; $w_{2\_1}$ is a model parameter of the second iteration of the worker module 2; and $\Delta w_{2\_2}$ is the local gradient of the second iteration of the worker module 2;

$w_{3\_2}$ is a model parameter of the third iteration of the worker module 3; $w_{3\_1}$ is a model parameter of the second iteration of the worker module 3; and $\Delta w_{1\_2}$ is the local gradient of the second iteration of the worker module 3; and

$w_{4\_2}$ is a model parameter of the third iteration of the worker module 4; $w_{4\_1}$ is a model parameter of the second iteration of the worker module 3; and $\Delta w_{4\_2}$ is the local gradient of the second iteration of the worker module 4.

Optionally, if the worker module has pulled the global gradient of the first iteration from the server module, the worker module calculates a model parameter of each worker module in the third iteration based on the foregoing formula (2). $\lambda$ in the formula (2) is set to 0.01, and $\chi$ is set to 0.4. A result shown in a formula (8) is obtained:

$$w_{1\_2} = w_{1\_1} + 0.01 \cdot \Delta w_{1\_2} + 0.4 \cdot \Delta w_1$$

$$w_{2\_2} = w_{2\_1} + 0.01 \cdot \Delta w_{2\_2} + 0.4 \cdot \Delta w_1$$

$$w_{3\_2} = w_{3\_1} + 0.01 \cdot \Delta w_{3\_2} + 0.4 \cdot \Delta w_1$$

$$w_{4\_2} = w_{4\_1} + 0.01 \cdot \Delta w_{4\_2} + 0.4 \cdot \Delta w_1 \dots \text{formula (8)}$$

In the formula (8):

$w_{1-2}$ is a model parameter of the third iteration of the worker module 1; $w_{1\_1}$ is a model parameter of the second iteration of the worker module 1; and $\Delta w_{1\_2}$ is the local gradient of the second iteration of the worker module 1;

$w_{2\_2}$ is a model parameter of the third iteration of the worker module 2; $ww_{2\_1}$ is a model parameter of the second iteration of the worker module 2; and $\Delta w_{2\_2}$ is the local gradient of the second iteration of the worker module 2;

$w_{3\_2}$ is a model parameter of the third iteration of the worker module 3; $w_{3\_1}$ is a model parameter of the second iteration of the worker module 3; and $\Delta w_{3\_2}$ is the local gradient of the second iteration of the worker module 3;

$w_{4\_2}$ is a model parameter of the third iteration of the worker module 4; $w_{4\_1}$ is a model parameter of the second iteration of the worker module 4; and $\Delta w_{4\_2}$ is the local gradient of the second iteration of the worker module 4; and

$\Delta w_1$ is the global gradient of the first iteration.

In a process of the third iteration, the worker modules calculate respective local gradients of the third iteration based on the respective model parameters of the third iteration, and simultaneously pull the global gradient of the first iteration from the server module, and the CPUs corresponding to the worker modules preprocess a next image, that is, preprocess sample data of a fourth iteration. This example provides an optional calculation formula (9) for each worker module to calculate the local gradient of the third iteration:

$$\Delta w_{1\_3} = (\Delta w_{1\_3}^1 + \Delta w_{1\_3}^2 + \ldots + \Delta w_{1\_3}^{64}) / 64$$

$$\Delta w_{2\_3} = (\Delta w_{2\_3}^1 + \Delta w_{2\_3}^2 + \ldots + \Delta w_{2\_3}^{64}) / 64$$

$$\Delta w_{3\_3} = (\Delta w_{3\_3}^1 + \Delta w_{3\_3}^2 + \ldots + \Delta w_{3\_3}^{64}) / 64$$

$$\Delta w_{4\_3} = (\Delta w_{4\_3}^1 + \Delta w_{4\_3}^2 + \ldots + \Delta w_{4\_3}^{64}) / 64 \ldots \text{formula (9)}$$

In the formula (9):

$\Delta w_{1\_3}$ is a local gradient of the third iteration of the worker module 1;
$\Delta w_{2\_3}$ is a local gradient of the third iteration of the worker module 2;
$\Delta w_{3\_3}$ is a local gradient of the third iteration of the worker module 3; and
$\Delta w_{4\_3}$ is a local gradient of the third iteration of the worker module 4.

The process of the third iteration ends. A process of the fourth iteration starts.

Optionally, if the worker module has not pulled the global gradient of the first iteration from the server module, the worker module performs in parallel the following steps: calculating a model parameter of the fourth iteration, calculating a local gradient of the fourth iteration, and pulling the global gradient $\Delta\omega_1$ of the first iteration from the server module.

If the worker module has not pulled the global gradient of the first iteration from the server module, the worker module calculates a model parameter of each worker module in the fourth iteration based on the foregoing formula (1).

Optionally, if the worker module has pulled the global gradient of the first iteration from the server module, the worker module calculates a model parameter of each worker module in the fourth iteration based on the foregoing formula (2). The model parameter of each worker module in the fourth iteration is calculated based on the foregoing formula (2), $\lambda$ in the formula (2) is set to 0.01, and $\chi$ is set to 0.4. A result shown in a formula (10) is obtained:

$$w_{1\_3} = w_{1\_2} + 0.01\Delta w_{1\_3} + 0.4\Delta w_1$$

$$w_{2\_3} = w_{2\_3} + 0.01\Delta w_{2\_3} + 0.4\Delta w_1$$

$$w_{3\_3} = w_{3\_2} + 0.01\Delta w_{3\_3} + 0.4\Delta w_1$$

$$w_{4\_3} = w_{4\_2} + 0.01\Delta w_{4\_3} + 0.4\Delta w_1 \ldots \text{formula (10)}$$

In the formula (10):

$w_{1\_3}$ is a model parameter of the fourth iteration of the worker module 1; $w_{1\_2}$ is the model parameter of the third iteration of the worker module 1; and $\Delta w_{1\_3}$ is the local gradient of the third iteration of the worker module 1;

$w_{2\_3}$ is a model parameter of the fourth iteration of the worker module 2; $w_{2\_2}$ is the model parameter of the third iteration of the worker module 2; and $\Delta w_{2\_3}$ is the local gradient of the third iteration of the worker module 2;

$w_{3\_3}$ is a model parameter of the fourth iteration of the worker module 3; $w_{3\_2}$ is the model parameter of the third iteration of the worker module 3; and $\Delta w_{3\_3}$ is the local gradient of the third iteration of the worker module 3;

$w_{4\_3}$ is a model parameter of the fourth iteration of the worker module 4; $w_{4\_2}$ is the model parameter of the third iteration of the worker module 4; and $\Delta w_{4\_3}$ is the local gradient of the third iteration of the worker module 4; and

$\Delta w_1$ is the global gradient of the first iteration.

Then the local gradient of the fourth iteration is calculated based on the model parameter of the fourth iteration. A process of a remaining iteration is similar to the foregoing content and is not further described herein.

Optionally, the worker module pushes the local gradients to the server module, and the server module calculates the global gradient based on the local gradient, and optionally, may calculate an average value of the local gradients, as the global gradient. This embodiment of this application provides a formula (11) for calculating the global gradient:

$$\Delta w_1 = (w_{1\_1} + w_{2\_1} + ...w_{n\_1}... + w_{N\_1})/N \quad \text{... formula (11)}$$

In the formula (11):

$\Delta w_1$ is the global gradient of the first iteration;

$w_{1\_1}$ is a local gradient of the first iteration of the worker module 1;

$w_{2\_1}$ is a local gradient of the first iteration of the worker module 2;

$w_{n\_1}$ is a local gradient of the first iteration of the worker module n, where a value range of n is [1, N]; and

$w_{N\_1}$ is a local gradient of the first iteration of the worker module N, where N is a total quantity of worker modules.

It can be learned from the foregoing content that, in this embodiment of this application, information about the global gradient is used to adjust model update of each worker module without adding additional communication time overheads, thereby resolving a problem of consistent model convergence caused by relatively weak synchronization in a conventional communication mode. This application effectively resolves a problem of a communication bottleneck caused by a large model while ensuring stable convergence of a large-scale distributed neural network model (including a deep learning model). This is also the first time for the industry to propose a solution of completely overlapping communication time overheads and calculation time overheads of large-scale distributed machine learning. In this way, the communication bottleneck is avoided, and near-linear acceleration can be achieved in an optimal case.

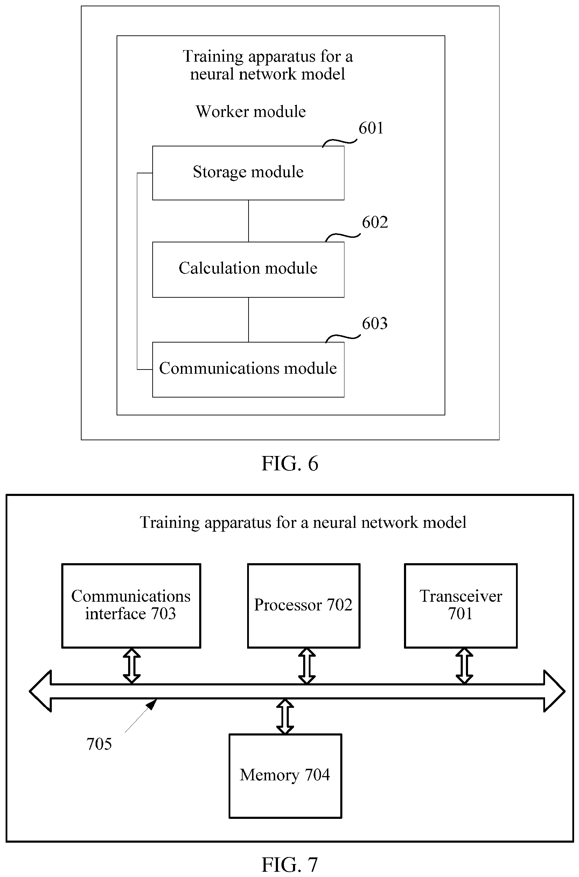

FIG. 6 is an example of a schematic structural diagram of a training apparatus for a neural network model according to an embodiment of this application.

Based on a same concept, this embodiment of this application provides the training apparatus for a neural network model. As shown in FIG. 6, the training apparatus includes N worker modules, and the training apparatus is applicable to a training system that includes a server module and the N worker modules. The server module and the N worker modules are configured to train a model parameter within at least one training period, and each of the at least one training period includes K iterations. A worker module is one of the N worker modules, and the worker module includes a communications module and a calculation module. For an $i^{th}$ iteration of one of the N worker modules within each training period, where N and K each are an integer greater than or equal to 1, and i is an integer greater than or equal to 1 and less than or equal to K: Each of the N worker modules includes a communications module 603 and a calculation module 602, and optionally, may further include a storage module 601. Optionally, the storage module is further configured to store information such as a pulled global gradient.

The communications module 603 and the calculation module 602 of each worker module run in parallel.

The calculation module 602 is configured to calculate a model parameter of an $(i+1)^{th}$ iteration based on a local gradient of the $i^{th}$ iteration and a model parameter of the $i^{th}$ iteration, and if i is less than K, calculate a local gradient of the $(i+1)^{th}$ iteration based on the model parameter of the $(i+1)^{th}$ iteration and sample data of the $(i+1)^{th}$ iteration.

The communications module 603 is configured to: pull a global gradient of an $r^{th}$ iteration from the server module and/or push a local gradient of an $f^{th}$ iteration to the server module, where r and f each are a positive integer less than or equal to i.

In this embodiment of this application, the communications module and the calculation module run in parallel in each iteration process, the communications module executes a first process, and the calculation module executes a second process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

Optionally, the calculation module 602 is configured to: calculate, if it is determined that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, there is no need to wait for the communication process, thereby further reducing the iteration duration and improving the model parameter training efficiency.

Optionally, the calculation module 602 is configured to: calculate, if it is determined that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, a model parameter can be updated based on a global gradient in an iteration nearest to a current iteration process, thereby accelerating model parameter convergence.

Optionally, the first condition further includes: the global gradient of the $j^{th}$ iteration is a global gradient in an iteration with a largest iteration batch number in all global gradients that have been pulled from the server module.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency.

Optionally, the communications module 603 is configured to: pull the global gradient of the $r^{th}$ iteration from the server module; or pull the global gradient of the $r^{th}$ iteration from the server module, and push a local gradient of an $(i-1)^{th}$ iteration to the server module; or pull the global gradient of the $r^{th}$ iteration from the server module, and push the local gradient of the $i^{th}$ iteration to the server module; or push a local gradient of an $(i-1)^{th}$ iteration to the server module; or push the local gradient of the $i^{th}$ iteration to the server module. In this way, flexibility of the worker module can be improved, and on the other hand, a local gradient in an iteration nearest to a current iteration process can be pushed to the server module as much as possible, thereby accelerating model parameter convergence.

Optionally, if i is K, the communications module 603 is further configured to: push a model parameter of a $(K+1)^{th}$ iteration to the server module after the calculation module is used to calculate a local gradient of a $K^{th}$ iteration and calculate the model parameter of the $(K+1)^{th}$ iteration based on the local gradient of the $K^{th}$ iteration and a model parameter of the $K^{th}$ iteration, where the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved.

It can be learned from the foregoing content that: in this embodiment of this application, the first process and the second process are executed in parallel in each iteration process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

It should be noted that unit division in this embodiment of this application is an example and is merely logical function division. During actual implementation, there may be another division manner. Functional units in the embodiments of this application may be integrated into one processing unit, or each of the units may exist alone physically, or two or more units are integrated into one unit. The integrated unit may be implemented in a form of hardware, or may be implemented in a form of a software functional unit.

FIG. 7 is an example of a schematic structural diagram of a training apparatus for a neural network model according to an embodiment of this application.

Based on a same concept, this embodiment of this application provides the training apparatus for a neural network model, for performing the foregoing method procedure. As shown in FIG. 7, the training apparatus includes a transceiver 701 and a processor 702. The processor 702 includes N processor cores. Optionally, a memory 704 and a communications interface 703 may further be included. Optionally, a bus 705 may further be included.

The processor, the memory, and the transceiver are connected to one another by using the bus. The bus may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 7, but this does not mean that there is only one bus or only one type of bus.

The memory 704 may include a volatile memory, for example, a random-access memory (RAM). The memory may alternatively include a non-volatile memory, for example, a flash memory, a hard disk drive (HDD), or a solid-state drive (SSD). The memory 704 may alternatively include a combination of the foregoing types of memories.

The N processor cores included in the processor 702 may include GPUs, or may include a GPU and a CPU. The processor core may further include a hardware chip. The hardware chip may be an application-specific integrated circuit (ASIC), a programmable logic device (PLD), or a combination thereof. The foregoing PLD may be a complex programmable logic device (CPLD), a field-programmable logic gate array (FPGA), a generic array logic (GAL), or any combination thereof.

The transceiver is configured to implement data transmission between each worker module and a server module.

The memory is configured to store an instruction. Optionally, the memory is further configured to store information such as a pulled global gradient.

The processor includes N processor cores. The training apparatus is applicable to a training system that includes a server module and N processor cores. The server module and the N processor cores are configured to train a model parameter within at least one training period. Each of the at least one training period includes K iterations. For an $i^{th}$ iteration of one of the N worker modules within each training period, where N and K each are an integer greater than or equal to 1, and i is an integer greater than or equal to 1 and less than or equal to K, the transceiver 701 and the processor 702 operate in parallel for each worker module.

The processor 702 is configured to calculate a model parameter of an $(i+1)^{th}$ iteration based on a local gradient of the $i^{th}$ iteration and a model parameter of the $i^{th}$ iteration, and if i is less than K, calculate a local gradient of the $(i+1)^{th}$ iteration based on the model parameter of the $(i+1)^{th}$ iteration and sample data of the $(i+1)^{th}$ iteration.

The transceiver 701 is configured to: pull a global gradient of an $r^{th}$ iteration from the server module and/or push a local gradient of an $f^{th}$ iteration to the server module, where r and f each are a positive integer less than or equal to i.

The memory is configured to store the global gradient pulled from the server module and the calculated local gradient.

In this embodiment of this application, the transceiver and the processor run in parallel in each iteration process, the processor executes a first process, and the transceiver executes a second process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

Optionally, the processor 702 is configured to: calculate, if it is determined that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, where j is a positive integer less than or equal to i, and the first condition includes: the global gradient of the $j^{th}$ iteration has not been used to calculate a model parameter in any iteration between a first iteration and the $i^{th}$ iteration. In this way, there is no need to wait for the communication process, thereby further reducing the iteration duration and improving the model parameter training efficiency.

Optionally, the processor 702 is configured to: calculate, if it is determined that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration. In this way, a model parameter can be updated based on a global gradient in an iteration nearest to a current iteration process, thereby accelerating model parameter convergence.

Optionally, the first condition further includes: the global gradient of the $j^{th}$ iteration is a global gradient in an iteration with a largest iteration batch number in all global gradients that have been pulled from the server module. In this way, the model parameter of the $(i+1)^{th}$ iteration can be calculated based on the global gradient of the $j^{th}$ iteration that meets the first condition and that has been pulled from the server module, thereby improving accuracy of calculating the model parameter of the $(i+1)^{th}$ iteration. On the other hand, the global gradient of the $j^{th}$ iteration that meets the first condition is selected from global gradients that have been pulled from the server module, and there is no need to wait for the communication process, thereby further reducing iteration duration and improving the model parameter training efficiency.

Optionally, the global gradient of the $j^{th}$ iteration is determined based on the following content: one or more local gradients of the $j^{th}$ iteration that are reported by M of the N worker modules, where M is an integer greater than or equal to 1 and less than or equal to N. In this way, the worker module and the server module can work more flexibly, and an amount of communication between the worker module and the server module is further reduced.

Optionally, the transceiver 701 is configured to: pull the global gradient of the $r^{th}$ iteration from the server module; or pull the global gradient of the $r^{th}$ iteration from the server module, and push a local gradient of an $(i-1)^{th}$ iteration to the server module; or pull the global gradient of the $r^{th}$ iteration from the server module, and push the local gradient of the $i^{th}$ iteration to the server module; or push a local gradient of an $(i-1)^{th}$ iteration to the server module; or push the local gradient of the $i^{th}$ iteration to the server module. In this way, flexibility of the worker module can be improved, and on the other hand, a local gradient in an iteration nearest to a current iteration process can be pushed to the server module as much as possible, thereby accelerating model parameter convergence. Optionally, if i is K, the transceiver 701 is further configured to: push a model parameter of a $(K+1)^{th}$ iteration to the server module after the processor is used to calculate a local gradient of a $K^{th}$ iteration and calculate the model parameter of the $(K+1)^{th}$ iteration based on the local gradient of the $K^{th}$ iteration and a model parameter of the $K^{th}$ iteration, where the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module. In this way, accuracy of a model parameter of a training period is improved.

It can be learned from the foregoing content that: in this embodiment of this application, the first process and the second process are executed in parallel in each iteration process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

Based on a same concept, an embodiment of this application provides a training chip for a neural network model. The chip is applicable to a training system that includes N chips and a server. The server module and the N chips are configured to train a model parameter within at least one training period. Each of the at least one training period includes K iterations. Each of the N chips is configured to perform the method performed by the worker module in the first aspect.

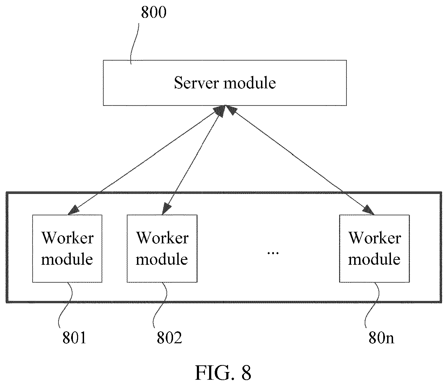

FIG. 8 is an example of a schematic structural diagram of a training system for a neural network model according to an embodiment of this application.

Based on a same concept, this embodiment of this application provides the schematic structural diagram of the training system for a neural network model. As shown in FIG. 8, the system includes a server module 800 and N worker modules: a worker module 801 and a worker module 802 to a worker module 80n. The server module 800 and the N worker modules: the worker module 801 and the worker module 802 to the worker module 80n are configured to train a model parameter within at least one training period. Each of the at least one training period includes K iterations.

For an $i^{th}$ iteration of one of the N worker modules within each training period, each of the N worker modules: the worker module 801 and the worker module 802 to the worker module 80n is configured to perform in parallel the following steps: calculating a model parameter of an $(i+1)^{th}$ iteration based on a local gradient of the $i^{th}$ iteration and a model parameter of the $i^{th}$ iteration, and if i is less than K, calculating a local gradient of the $(i+1)^{th}$ iteration based on the model parameter of the $(i+1)^{th}$ iteration and sample data of the $(i+1)^{th}$ iteration; and pulling a global gradient of an $r^{th}$ iteration from the server module and/or pushing a local gradient of an $f^{th}$ iteration to the server module, where r and f each are a positive integer less than or equal to i, where N and K each are an integer greater than or equal to 1, and i is an integer greater than or equal to 1 and less than or equal to K.

The server module 800 is configured to: calculate the global gradient of the $r^{th}$ iteration based on a received local gradient of the $r^{th}$ iteration that is pushed by the worker module, and pull the global gradient of the $r^{th}$ iteration to the worker module; and receive the local gradient of the $f^{th}$ iteration that is pushed by the worker module, and calculate a global gradient of the $f^{th}$ iteration based on the local gradient of the $f^{th}$ iteration that is pushed by the worker module.

It can be learned from the foregoing content that: in this embodiment of this application, the first process and the second process are executed in parallel in each iteration process. The first process is a calculation process, and specifically includes calculating the model parameter of the $(i+1)^{th}$ iteration and calculating the local gradient of the $(i+1)^{th}$ iteration. The second process is a communication process, and specifically includes pulling the global gradient of the $r^{th}$ iteration from the server module and/or pushing the local gradient of the $f^{th}$ iteration to the server module. In the first process, the model parameter of the $(i+1)^{th}$ iteration is calculated based on the local gradient of the $i^{th}$ iteration and the model parameter of the $i^{th}$ iteration. This avoids a prior-art solution in which a model parameter of an $(i+1)^{th}$ iteration can be calculated only after waiting until a global gradient of an $i^{th}$ iteration is pulled from a server module, thereby reducing duration of an iteration and improving model parameter training efficiency.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a digital versatile disc (DVD)), a semiconductor medium (for example, a solid state disk (SSD)), or the like.

Persons skilled in the art should understand that the embodiments of this application may be provided as a method, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the scope of this application. This application is intended to cover these modifications and variations of this application provided that they fall within the scope of protection defined by the following claims.

**Claims**

1. A method for training a neural network model, wherein the method is applicable to a training system that comprises a server module (101; 307, 301, 302, 303; 800) and N worker modules (102; 308, 304, 305, 306; 801, 802, 80n), each worker module comprises a calculation module (602) and a communications module (603) running in parallel, the server module and the N worker modules are configured to train a model parameter within at least one training period, each of the at least one training period comprises K iterations, and for an $i^{th}$ iteration of one of the N worker modules within each training period, wherein the method comprises:

the calculation module calculating (402) a model parameter of an $(i+1)^{th}$ iteration based on a local gradient of the $i^{th}$ iteration and a model parameter of the $i^{th}$ iteration, and if i is less than K, calculating a local gradient of the $(i+1)^{th}$ iteration based on the model parameter of the $(i+1)^{th}$ iteration and sample data of the $(i+1)^{th}$ iteration; and

the communications module pulling (403) a global gradient of an $r^{th}$ iteration from the server module and pushing a local gradient of an $f^{th}$ iteration to the server module, wherein r and f each are a positive integer less than or equal to i, wherein

N and K each are an integer greater than or equal to 1, and i is an integer greater than or equal to 1 and less than or equal to K.

2. The method according to claim 1, wherein the calculating, by the worker module, a model parameter of an $(i+1)^{th}$ iteration based on a local gradient of the $i^{th}$ iteration and a model parameter of the $i^{th}$ iteration comprises:

calculating, by the worker module if determining that a global gradient of a $j^{th}$ iteration that meets a first condition has been pulled from the server module, the model parameter of the $(i+1)^{th}$ iteration based on the global gradient of the $j^{th}$ iteration, the local gradient of the $i^{th}$ iteration, and the model parameter of the $i^{th}$ iteration, wherein j is a positive integer less than or equal to i, and the first condition comprises: the global gradient of the $j^{th}$ iteration has not been used to calculate a model parameter in any iteration between a first iteration and the $i^{th}$ iteration; or calculating, by the worker module if determining that a global gradient of a $j^{th}$ iteration that meets a first condition has not been pulled from the server module, the model parameter of the $(i+1)^{th}$ iteration based on the local gradient of the $i^{th}$ iteration and the model parameter of the $i^{th}$ iteration.

3. The method according to claim 2, wherein the first condition further comprises: the global gradient of the $j^{th}$ iteration is a global gradient in an iteration with a largest iteration batch number in all global gradients that have been pulled from the server module.

4. The method according to claim 2 or 3, wherein the global gradient of the $j^{th}$ iteration is determined based on the following step:
one or more local gradients of the $j^{th}$ iteration that are reported by M of the N worker modules, wherein M is an integer greater than or equal to 1 and less than or equal to N.

5. The method according to any one of claims 1 to 4, wherein if i is K, the method further comprises:

pushing, by the worker module, a model parameter of a $(K+1)^{th}$ iteration to the server module after the worker module calculates a local gradient of a $K^{th}$ iteration and calculates the model parameter of the $(K+1)^{th}$ iteration based on the local gradient of the $K^{th}$ iteration and a model parameter of the $K^{th}$ iteration, wherein the model parameter of the $(K+1)^{th}$ iteration is used to enable the server module to determine a model parameter of a first iteration within a next training period based on the iteration quantity K and the model parameter of the $(K+1)^{th}$ iteration that is pushed by each of the N worker modules to the server module.

6. A system for training a neural network model, wherein the system comprises a server module (101; 307, 301, 302, 303; 800) and N worker modules (102; 308, 304, 305, 306; 801, 802, 80n), each work module comprises a calculation module (602) and a communications module (603) running in parallel, the server module and the N worker modules are configured to train a model parameter within at least one training period, and each of the at least one training period comprises K iterations;

for an $i^{th}$ iteration of one of the N worker modules within each training period, the calculation module and the communications module of each worker module is configured to perform in parallel the following steps: the calculation module calculating (401) a model parameter of an $(i+1)^{th}$ iteration based on a local gradient of the $i^{th}$ iteration and a model parameter of the $i^{th}$ iteration, and if i is less than K, calculating a local gradient of the $(i+1)^{th}$ iteration based on the model parameter of the $(i+1)^{th}$ iteration and sample data of the $(i+1)^{th}$ iteration; and the communications module pulling (402) a global gradient of an $r^{th}$ iteration from the server module and pushing a local gradient of an $f^{th}$ iteration to the server module, wherein r and f each are a positive integer less than or equal to i, wherein N and K each are an integer greater than or equal to 1, and i is an integer greater than or equal to 1 and less than or equal to K; and the server module is configured to: calculate the global gradient of the $r^{th}$ iteration based on a received local gradient of the $r^{th}$ iteration that is pushed by the worker module, and pull the global gradient of the $r^{th}$ iteration to the worker module; and receive the local gradient of the $f^{th}$ iteration that is pushed by the worker module, and calculate a global gradient of the f$^{th}$ iteration based on the local gradient of the f$^{th}$ iteration that is pushed by the worker module.

7. A computer storage medium, wherein the computer storage medium stores computer executable instructions respectively for a calculation module, a server module and N worker modules, which when being called by a respective computer of the calculation module, the server module and The N worker modules, cause the respective computer to perform the method steps carried out by of the calculation module, the server module and he N worker modules in any one of claims 1 to 5.

**Patentansprüche**

1. Verfahren zum Trainieren eines neuronalen Netzwerkmodells, wobei das Verfahren anwendbar ist in einem Trainingssystem, das ein Servermodul (101; 307, 301, 302, 303; 800) und N Arbeitsmodule (102; 308, 304, 305, 306; 801, 802, 80n) umfasst, wobei jedes Arbeitsmodul ein Berechnungsmodul (602) und ein Kommunikationsmodul (603) umfasst, die parallel ablaufen, wobei das Servermodul und die N Arbeitsmodule konfiguriert sind zum Trainieren eines Modellparameters innerhalb von mindestens einer Trainingsperiode, wobei jede der mindestens einen Trainingsperiode K Iterationen umfasst und wobei das Verfahren für ein i-te Iteration von einem der N Arbeitsmodule innerhalb jeder Trainingsperiode umfasst:

   Berechnen (402), durch das Berechnungsmodul, eines Modellparameters einer (i + 1)-ten Iteration aufgrund eines lokalen Gradienten der i-ten Iteration und eines Modellparameters der i-ten Iteration und wenn i kleiner als K ist, Berechnen eines lokalen Gradienten der (i + 1)-ten Iteration aufgrund des Modellparameters der (i + 1)-ten Iteration und von Stichprobendaten der (i + 1)-ten Iteration; und,
   durch das Kommunikationsmodul, Abziehen (403) eines globalen Gradienten einer r-ten Iteration aus dem Servermodul und Verschieben eines lokalen Gradienten einer f-ten Iteration in das Servermodul, wobei r und f jeweils eine positive ganze Zahl kleiner als oder gleich i sind, wobei
   N und K jeweils ganze Zahlen sind, die größer als oder gleich 1 sind; und wobei i eine ganze Zahl größer als oder gleich 1 und kleiner als oder gleich K ist.

2. Verfahren nach Anspruch 1, wobei das Berechnen, durch das Arbeitsmodul, eines Modellparameters einer (i + 1)-ten Iteration aufgrund eines lokalen Gradienten der i-ten Iteration und eines Modellparameters der i-ten Iteration umfasst:

   Berechnen, durch das Arbeitsmodul, wenn ermittelt wird, dass ein globaler Gradient einer j-ten Iteration, der eine erste Bedingung erfüllt, aus dem Servermodul abgezogen wurde, des Modellparameters der (i + 1)-ten Iteration aufgrund des globalen Gradienten der j-ten Iteration, des lokalen Gradienten der i-ten Iteration und des Modellparameters der i-ten Iteration, wobei j eine positive ganze Zahl kleiner als oder gleich i ist und wobei die erste Bedingung umfasst, dass der globale Gradient der j-ten Iteration nicht verwendet wurde, um einen Modellparameter in einer beliebigen Iteration zwischen einer ersten Iteration und der i-ten Iteration zu berechnen; oder
   Berechnen, durch das Arbeitsmodul, wenn ermittelt wird, dass ein globaler Gradient einer j-ten Iteration, der eine erste Bedingung erfüllt, nicht aus dem Servermodul abgezogen wurde, des Modellparameters der (i + 1)-ten Iteration aufgrund des lokalen Gradienten der i-ten Iteration und des Modellparameters der i-ten Iteration,

3. Verfahren nach Anspruch 2, wobei die erste Bedingung außerdem umfasst, dass der globale Gradient der j-ten Iteration ein globaler Gradient in einer Iteration mit einer größten Iterationsbatchnummer von allen globalen Gradienten ist, die aus dem Servermodul abgezogen wurden.

4. Verfahren nach Anspruch 2 oder 3, wobei der globale Gradient der j-ten Iteration aufgrund des folgenden Schritts ermittelt wird:
   ein oder mehrere lokale Gradienten der j-ten Iteration, die von M der N Arbeitsmodule gemeldet wurden, wobei M eine ganze Zahl größer als oder gleich 1 und kleiner als oder gleich N ist.

5. Verfahren nach einem der Ansprüche 1 bis 4, wobei das Verfahren, wenn i gleich K ist, außerdem umfasst:

   Verschieben, durch das Arbeitsmodul, eines Modellparameters einer (K + 1)-ten Iteration in das Servermodul, nachdem das Arbeitsmodul einen lokalen Gradienten einer K-ten Iteration berechnet hat und den Modellparameter der (K + 1)-ten Iteration aufgrund des lokalen Gradienten der K-ten Iteration und eines Modellparameters der K-ten Iteration berechnet hat, wobei

der Modellparameter der (K + 1)-ten Iteration verwendet wird, um dem Servermodul zu ermöglichen, einen Modellparameter einer ersten Iteration innerhalb einer nächsten Trainingsperiode aufgrund der Iterationsanzahl K und des Modellparameters der (K + 1)-ten Iteration zu ermitteln, der von jedem der N Arbeitsmodule in das Servermodul verschoben wird.

6. System zum Trainieren eines neuronalen Netzwerkmodells, wobei das System ein Servermodul (101; 307, 301, 302, 303; 800) und N Arbeitsmodule (102; 308, 304, 305, 306; 801, 802, 80n) umfasst, wobei jedes Arbeitsmodul ein Berechnungsmodul (602) und ein Kommunikationsmodul (603) umfasst, die parallel ablaufen, wobei das Servermodul und die N Arbeitsmodule konfiguriert sind zum Trainieren eines Modellparameters innerhalb von mindestens einer Trainingsperiode, und wobei jede der mindestens einen Trainingsperiode K Iterationen umfasst; wobei das Berechnungsmodul und das Kommunikationsmodul von jedem Arbeitsmodul für ein i-te Iteration von einem der N Arbeitsmodule innerhalb jeder Trainingsperiode konfiguriert sind zum parallelen Durchführen der folgenden Schritte:

Berechnen (401), durch das Berechnungsmodul, eines Modellparameters einer (i + 1)-ten Iteration aufgrund eines lokalen Gradienten der i-ten Iteration und eines Modellparameters der i-ten Iteration und wenn i kleiner als K ist, Berechnen eines lokalen Gradienten der (i + 1)-ten Iteration aufgrund des Modellparameters der (i + 1)-ten Iteration und von Stichprobendaten der (i + 1)-ten Iteration; und, durch das Kommunikationsmodul, Abziehen (402) eines globalen Gradienten einer r-ten Iteration aus dem Servermodul und Verschieben eines lokalen Gradienten einer f-ten Iteration in das Servermodul, wobei r und f jeweils eine positive ganze Zahl kleiner als oder gleich i sind, wobei N und K jeweils ganze Zahlen sind, die größer als oder gleich 1 sind; und wobei i eine ganze Zahl größer als oder gleich 1 und kleiner als oder gleich K ist: und wobei das Servermodul konfiguriert ist zum: Berechnen des globalen Gradienten der r-ten Iteration aufgrund eines empfangenen lokalen Gradienten der r-ten Iteration, der von dem Arbeitsmodul verschoben wird, und Abziehen des globalen Gradienten der r-ten Iteration zu dem Arbeitsmodul; und Empfangen des lokalen Gradienten der f-ten Iteration, der von dem Arbeitsmodul verschoben wird, und Berechnen eines globalen Gradienten der f-ten Iteration aufgrund des lokalen Gradienten der f-ten Iteration, der von dem Arbeitsmodul verschoben wird.

7. Computerspeichermedium, wobei in dem Computerspeichermedium in einem Computer ausführbare Befehle für ein Berechnungsmodul, ein Servermodul bzw. N Arbeitsmodule gespeichert sind, die, wenn sie durch einen jeweiligen Computer des Berechnungsmoduls, des Servermoduls und der N Arbeitsmodule aufgerufen werden, den jeweiligen Computer veranlassen, die Verfahrensschritte durchzuführen, die von dem Berechnungsmodul, dem Servermodul und den N Arbeitsmodulen in einem der Ansprüche 1 bis 5 ausgeführt werden.

**Revendications**

1. Procédé de formation d'un modèle de réseau neuronal, le procédé étant applicable à un système de formation qui comprend un module serveur (101 ; 307, 301, 302, 303 ; 800) et N modules travailleurs (102 ; 308, 304, 305, 306 ; 801, 802, 80n), chaque module travailleur comprenant un module de calcul (602) et un module de communication (603) fonctionnant en parallèle, le module serveur et les N modules travailleurs étant configurés pour former un paramètre de modèle dans au moins une période de formation, chacune de l'au moins une période de formation comprenant K itérations, et pour une $i^e$ itération d'un des N modules travailleurs dans chaque période de formation, le procédé comprenant les étapes consistant à :

calculer (402), par le module de calcul, un paramètre de modèle d'une $(i+1)^e$ itération sur la base d'un gradient local de la $i^e$ itération et d'un paramètre de modèle de la $i^e$ itération, et si i est inférieur à K, calculer un gradient local de la $(i+1)^e$ itération sur la base du paramètre de modèle de la $(i+1)^e$ itération et de données d'échantillon de la $(i+1)^e$ itération ; et tirer (403), par le module de communication, un gradient global d'une $r^e$ itération en provenance du module serveur et pousser un gradient local d'une $f^e$ itération vers le module serveur, r et f étant chacun un entier positif inférieur ou égal à i, N et K étant chacun un entier supérieur ou égal à 1, et i étant un entier supérieur ou égal à 1 et inférieur ou égal à K.

2. Procédé selon la revendication 1, dans lequel le calcul, par le module travailleur, d'un paramètre de modèle d'une

25

(i+1)$^e$ itération sur la base d'un gradient local de la i$^e$ itération et d'un paramètre de modèle de la i$^e$ itération comprend l'étape consistant à :

calculer, par le module travailleur s'il est déterminé qu'un gradient global d'une j$^e$ itération qui satisfait à une première condition a été tiré du module serveur, le paramètre de modèle de la (i+1)$^e$ itération sur la base du gradient global de la j$^e$ itération, du gradient local de la i$^e$ itération et du paramètre de modèle de la i$^e$ itération, j étant un entier positif inférieur ou égal à i, et la première condition comprenant : le gradient global de la j$^e$ itération n'a été utilisé dans aucune itération entre une première itération et la i$^e$ itération pour calculer un paramètre de modèle ; ou

calculer, par le module travailleur s'il est déterminé qu'un gradient global d'une j$^e$ itération qui satisfait à une première condition n'a pas été tiré du module serveur, le paramètre de modèle de la (i+1)$^e$ itération sur la base du gradient local de la i$^e$ itération et du paramètre de modèle de la i$^e$ itération.

3. Procédé selon la revendication 2, dans lequel la première condition comprend en outre : le gradient global de la j$^e$ itération est un gradient global dans une itération avec le plus grand numéro de lot d'itérations parmi tous les gradients globaux qui ont été tirés du module serveur.

4. Procédé selon la revendication 2 ou 3, dans lequel le gradient global de la j$^e$ itération est déterminé sur la base de l'étape suivante :
un ou plusieurs gradients locaux de la j$^e$ itération sont signalés par M des N modules travailleurs, M étant un entier supérieur ou égal à 1 et inférieur ou égal à N.

5. Procédé selon l'une quelconque des revendications 1 à 4, le procédé comprenant en outre, si i est égal à K, l'étape consistant à :

pousser, par le module travailleur, un paramètre de modèle d'une (K+1)$^e$ itération vers le module serveur après que le module travailleur a calculé un gradient local d'une K$^e$ itération et calculé le paramètre de modèle de la (K+1)$^e$ itération sur la base du gradient local de la K$^e$ itération et d'un paramètre de modèle de la K$^e$ itération, le paramètre de modèle de la (K+1)$^e$ itération étant utilisé pour permettre au module serveur de déterminer un paramètre de modèle d'une première itération dans une période de formation suivante sur la base du nombre d'itérations K et du paramètre de modèle de la (K+1)$^e$ itération qui est poussé par chacun des N modules travailleurs vers le module serveur.

6. Système de formation d'un modèle de réseau neuronal, le système comprenant un module serveur (101 ; 307, 301, 302, 303 ; 800) et N modules travailleurs (102 ; 308, 304, 305, 306 ; 801, 802, 80n), chaque module travailleur comprenant un module de calcul (602) et un module de communication (603) fonctionnant en parallèle, le module serveur et les N modules travailleurs étant configurés pour former un paramètre de modèle dans au moins une période de formation, et chacune de l'au moins une période de formation comprenant K itérations ;

pour une i$^e$ itération d'un des N modules travailleurs dans chaque période de formation, le module de calcul et le module de communication de chaque module travailleur étant configurés pour effectuer en parallèle les étapes suivantes : calculer (401), par le module de calcul, un paramètre de modèle d'une (i+1)$^e$ itération sur la base d'un gradient local de la i$^e$ itération et d'un paramètre de modèle de la i$^e$ itération, et si i est inférieur à K, calculer un gradient local de la (i+1)$^e$ itération sur la base du paramètre de modèle de la (i+1)$^e$ itération et de données d'échantillon de la (i+1)$^e$ itération ; et tirer (402), par le module de communication, un gradient global d'une r$^e$ itération en provenance du module serveur et pousser un gradient local d'une f$^e$ itération vers le module serveur, r et f étant chacun un entier positif inférieur ou égal à i, N et K étant chacun un entier supérieur ou égal à 1, et i étant un entier supérieur ou égal à 1 et inférieur ou égal à K ; et
le module serveur étant configuré pour : calculer le gradient global de la r$^e$ itération sur la base d'un gradient local reçu de la r$^e$ itération qui est poussé par le module travailleur, et tirer le gradient global de la r$^e$ itération vers le module travailleur ; et recevoir le gradient local de la f$^e$ itération qui est poussé par le module travailleur, et calculer un gradient global de la f$^e$ itération sur la base du gradient local de la f$^e$ itération qui est poussé par le module travailleur.

7. Support de stockage informatique, le support de stockage informatique stockant des instructions exécutables par ordinateur respectivement pour un module de calcul, un module serveur et N modules travailleurs, qui, lorsqu'elles sont appelées par un ordinateur respectif du module de calcul, du module serveur et des N modules travailleurs, amènent l'ordinateur respectif à effectuer les étapes de procédé exécutées par le module de calcul, le module serveur et les N modules travailleurs selon l'une quelconque des revendications 1 à 5.

Server module

Worker module

Database

FIG. 1

FIG. 2

301   302          303   307

...

308

304      305                    306

▨  Server module

☐  Worker module

FIG. 3

401

Each worker module performs in parallel step 402 and step 403

402

Each worker module calculates at least a model parameter of an $(i+1)^{th}$ iteration based on a local gradient of an $i^{th}$ iteration and a model parameter of the $i^{th}$ iteration, and if i is less than K, calculates a local gradient of the $(i+1)^{th}$ iteration based on the model parameter of the $(i+1)^{th}$ iteration and sample data of the $(i+1)^{th}$ iteration

403

Each worker module pulls a global gradient of an $r^{th}$ iteration and/or pushes a local gradient of an $f^{th}$ iteration

FIG. 4

Server module

Worker module 1

First iteration

Push a
local
gradient
of the
first
iteration

Second iteration

Pull a
global
gradient of
the first
iteration

Third iteration

Fourth iteration

Fifth iteration

Sixth iteration

Seventh iteration

...

$K^{th}$ iteration

One training period

Push a
local
gradient
of the
first
iteration

Pull a
global
gradient of
the first
iteration

Worker module 2

First iteration

Second iteration

Third iteration

Fourth iteration

Fifth iteration

Sixth iteration

Seventh iteration

...

$K^{th}$ iteration

One training period

FIG. 5

**FIG. 6**

**FIG. 7**

800

Server module

Worker module | Worker module | ... | Worker module

801      802      80n

FIG. 8